# EUROPEAN PATENT SPECIFICATION

(11) **EP 2 042 563 B1**
(45) Date of publication and mention of the grant of the patent: **10.11.2010**
(21) Application number: 08015550.0
(22) Date of filing: 03.09.2008
(51) Int. Cl.: C09D 4/00, C07D 311/00

(54) **Photocurable coating composition, and overprint and process for producing same**
Lichthärtbare Beschichtungszusammensetzung, Aufdruck und Herstellungsverfahren
Composition de revêtement photo-durcissable, et surimpression et son procédé de production

(30) Priority: 25.09.2007 JP 2007246637
(43) Date of publication of application: 01.04.2009
(73) Proprietor: FUJIFILM Corporation, Minato-ku Tokyo (JP)
(72) Inventor: Kakino, Ryuki, Haibara-gun Shizuoka (JP)
(74) Representative: HOFFMANN EITLE

(56) References cited:
- DE-A1- 19 907 957
- JP-A- 9 268 186
- JP-A- 63 045 272
- US-A1- 2006 073 410

## Description

The present invention relates to a photocurable coating composition, and to an overprint and a process for producing same. More particularly, the present invention relates to a photocurable coating composition that is curable upon exposure to actinic radiation such as an electron beam or UV rays. In particular, it relates to a photocurable coating composition for coating an image formed by depositing ink and/or toner on a printing substrate (image receiving substrate) by a method such as lithography, relief printing, intaglio printing, screen printing, inkjet, or electrophotography. Furthermore, it relates to a photocurable overprint composition (overprint composition) particularly suitably used for coating a toner-based printed material printed by an electrophotographic process.

In recent years, a large number of actinic radiation curable compositions that can be used in UV curable printing inks, paints, and coatings have been developed, and the spreading thereof is currently being promoted. However, it is at present difficult to obtain a photocurable composition that satisfies all requirements in terms of curability, surface smoothness, strength, storage stability.

In particular, when a layer of fuser oil is present on the surface of a toner-based image such as one obtained by an electrophotographic process, it is yet more difficult to obtain desired performance.

In a standard method for forming a toner-based image, such as an electrophotographic process, an electrostatic charge is formed on a latent image retaining surface by uniformly charging a latent image retaining surface such as, for example, a photoreceptor. Subsequently, charge on the uniformly charged region is selectively released by a pattern of activation irradiation corresponding to an original image. The latent image charge pattern remaining on the surface corresponds to regions that have not been exposed to radiation. Subsequently, the photoreceptor is passed through one or a plurality of development housings containing toner, and since the toner is deposited on the charge pattern by electrostatic attractive force, the latent image charge pattern is visualized. Subsequently, the developed image is either fixed on an image-forming surface or transferred to a printing substrate such as, for example, paper and fixed thereto by an appropriate fixation technique, thus giving an electrophotographically printed material, that is, a toner-based printed material.

As a known method for protecting a printed material, applying an overprint coating to the printed material has been proposed. For example, JP-A-11-70647 and JP-A-2003-241414 (JP-A denotes a Japanese unexamined patent application publication) propose a method such as an electrophotographic process, in which fixation is carried out after a transparent toner is transferred on top of a toner-based image, thus covering the surface.

Furthermore, JP-A-61-210365 proposes a method in which an overprint coating is applied by applying a liquid film coating that is curable by UV rays, etc. and polymerizing (crosslinking) a coating component by means of light.

On the other hand, a method has already been proposed in which a sensitizer is used together with a photopolymerization initiator so as to enhance sensitivity of a radiation curing type polymerizable compound toward radiation, and the use of various types of polymerization initiator systems has been disclosed. For example, use of a thioxanthone-based compound as a sensitizer has been proposed (JP-A-6-308727 and JP-A-56-143202).

DE 199 07 957 A1 discloses photopolymerizable compositions containing (a) at least one ethylenically unsaturated photopolymerizable compound and (b) a mono-, bi- or triacylphosphineoxide compound or its mixture with an α-hydroxyketone, α-aminoketone and/or benzoin derivative as a photoinitiator, (c) at least one optical brightener and (d) at least one pigment.

US 2006/073410 A1 is directed to a photosensitive composition comprising a specific sensitizing dye, an activator compound being capable of causing a chemical change due to a mutual action with light absorption of the sensitizing dye so as to generate at least one of a radical, an acid and a base, and a compound being capable of reacting with at least one of a radical and an acid so that physical or chemical characteristics thereof change irreversibly.

JP 09 268186 A is directed to the production of 4-chromanones by reacting a 3-phenoxypropionic acid derivative in concentrated sulfuric acid containing 1-50 wt.% of phosphorus pentoxide.

JP 63 045272 A concerns the preparation of substituted 4-chromanones by reacting a 3-phenoxypropionic acid derivative in the presence of chlorosulfonic acid or fluorosulfonic acid or SO₂ as a dehydrative cyclization agent.

It is an object of the present invention to provide a photocurable coating composition having excellent non-tackiness and transparency, and an overprint having excellent non-tackiness and transparency and a process for producing same by use of the photocurable coating composition.

The above object has been attained by (1), (6), or (7). They are described below together with (2) to (5), which are preferred embodiments.
(1) A photocurable coating composition comprising (A) a compound represented by Formula (I) below, (B) a photopolymerization initiator, and (C) a compound having an ethylenically unsaturated bond 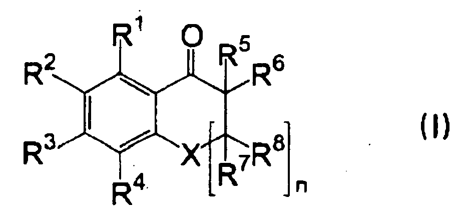 (in Formula (I), X denotes O, S, or NR, n denotes an integer of 0 to 4, R denotes a hydrogen atom, an alkyl group, or an acyl group, R¹ to R⁸ independently denote a hydrogen atom or a monovalent substituent, and R¹ to R⁴ may form a ring in which two thereof that are adjacent are bonded to each other),
(2) the photocurable coating composition according to (1) above, wherein the photopolymerization initiator comprises an α-aminoketone-based compound and/or an acylphosphine oxide-based compound,
(3) the photocurable coating composition according (1) or (2) above, wherein it has substantially no absorption in the visible region,
(4) the photocurable coating composition according to any one of (1) to (3) above, wherein it is for an overprint,
(5) the photocurable coating composition according to any one of (1) to (4) above, wherein it is for an overprint for an electrophotographically printed material,
(6) an overprint having on an electrophotographically printed material an overprint layer in which the photocurable coating composition according to any one of (1) to (5) above is photocured, and
(7) a process for producing an overprint, the process comprising a step of obtaining an electrophotographically printed material by carrying out electrophotographic printing on a printing substrate, a step of coating the electrophotographically printed material with the photocurable coating composition according to any one of (1) to (5) above, and a step of photocuring the photocurable coating composition.

In accordance with the present invention, there can be provided a photocurable coating composition having excellent non-tackiness and transparency, and an overprint having excellent non-tackiness and transparency and a process for producing same by use of the photocurable coating composition.

The present invention is explained in detail below.

### Photocurable coating composition

The photocurable coating composition of the present invention comprises (A) a compound represented by Formula (I) below, (B) a photopolymerization initiator, and (C) a compound having an ethylenically unsaturated bond.

The overprint of the present invention has an overprint layer on a printed material, the overprint layer being formed by photocuring the photocurable coating composition. The printed material is preferably an electrophotographically printed material.

The process for producing an overprint of the present invention comprises a step of obtaining a printed material by carrying out printing on a printing substrate, a step of coating the printed material with the photocurable coating composition, and a step of photocuring the photocurable coating composition. Moreover, the process for producing an overprint of the present invention preferably comprises a step of obtaining an electrophotographically printed material by carrying out electrophotographic printing on a printing substrate, a step of coating the electrophotographically printed material with the photocurable coating composition, and a step of photocuring the photocurable coating composition. 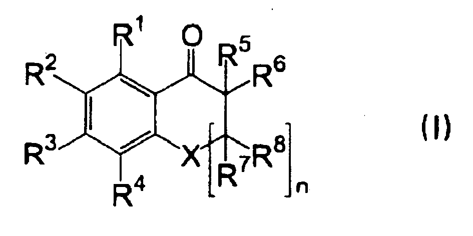 (In Formula (I), X denotes O, S, or NR, n denotes an integer of 0 to 4, R denotes a hydrogen atom, an alkyl group, or an acyl group, R¹ to R⁸ independently denote a hydrogen atom or a monovalent substituent, and R¹ to R⁴ may form a ring in which two thereof that are adjacent are bonded to each other.)

The photocurable coating composition of the present invention preferably has substantially no absorption in the visible region. 'Having substantially no absorption in the visible region' means either having no absorption in a visible region of 400 to 700 nm or having only a level of absorption in the visible region that does not cause any problem as a photocurable coating composition. Specifically, a 5 µm optical path length transmittance of the coating composition in a wavelength region of 400 to 700 nm is at least 70%, and preferably at least 80%.

The photocurable coating composition of the present invention may suitably be used as one for an overprint, and may particularly suitably be used as one for an overprint for an electrophotographically printed material.

When the photocurable coating composition of the present invention is used for forming an overprint layer on an electrophotographically printed material having an image area with a thickness of a toner, an overprint with excellent non-tackiness and transparency and having luster and gloss can be obtained, and an impression that it is visually close to a conventional silver halide photographic print can be given.

Furthermore, when the photocurable coating composition of the present invention is used for a toner image having a layer of fuser oil on the image surface, an image-printed material that has excellent non-tackiness and transparency, has luster and gloss, has little distortion, and is highly flexible can be given, and an overprint that is visually close to a silver halide photographic print can be obtained.

### (A) Compound represented by Formula (I) (sensitizer)

The photocurable coating composition of the present invention comprises a compound represented by Formula (I) below in order to promote decomposition of a photopolymerization initiator by irradiation with actinic radiation.

The compound represented by Formula (I) functions as a sensitizer in the photocurable coating composition of the present invention. 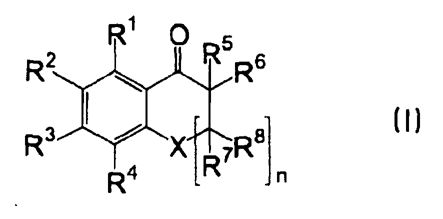 (In Formula (I), X denotes O, S, or NR, n denotes an integer of 0 to 4, R denotes a hydrogen atom, an alkyl group, or an acyl group, R¹ to R⁸ independently denote a hydrogen atom or a monovalent substituent, and R¹ to R⁴ may form a ring in which two thereof that are adjacent are bonded to each other.)

In Formula (I) above, X denotes O, S, or NR, and R denotes a hydrogen atom, an alkyl group, or an acyl group. n denotes an integer of 0 to 4.

X is preferably O or S, and more preferably S.

When n is 0, there is no carbon atom to which R⁷ and R⁸ are bonded, and X, which comprises a hetero atom, and the carbon atom to which R⁵ and R⁶ are bonded are directly bonded to each other to form an X-containing five-membered hetero ring.

R¹, R², R³, R⁴, R⁵, R⁶, R⁷, and R⁸ independently denote a hydrogen atom or a monovalent substituent.

When R¹, R², R³, R⁴, R⁵, R⁶, R⁷ and R⁸ denote a monovalent substituent, examples of the monovalent substituent include a halogen atom, an aliphatic group, an aromatic group, a heterocyclic group, a cyano group, a hydroxy group, a nitro group, an amino group, a mono- or di-alkylamino group, an alkoxy group, an aryloxy group, an amido group, an arylamino group, a ureido group, a sulfamoylamino group, an alkylthio group, an arylthio group, an alkoxycarbonylamino group, a sulfonamido group, a carbamoyl group, a sulfamoyl group, a sulfonyl group, an alkoxycarbonyl group, a heterocyclooxy group, an azo group, an acyloxy group, a carbamoyloxy group, a silyloxy group, an aryloxycarbonyl group, an aryloxycarbonylamino group, an imido group, a heterocyclothio group, a sulfinyl group, a phosphoryl group, an acyl group, a carboxyl group, and a sulfo group, and among them an alkyl group and a halogen atom are preferable.

When R¹, R², R³, R⁴, R⁵, R⁶, R⁷ and R⁸ in Formula (I) denote a monovalent substituent, preferred examples of the alkyl group include those having 1 to 4 carbons such as a methyl group, an ethyl group, a propyl group, an *n*-butyl group, a *sec*-butyl group, and a *t*-butyl group.

Similarly, preferred examples of the alkoxy group include those having 1 to 4 carbons such as a methoxy group, an ethoxy group, a hydroxyethoxy group, a propoxy group, a *n*-butoxy group, an isobutoxy group, a *sec*-butoxy group, and a *t*-butoxy group.

Examples of the halogen atom include a fluorine atom, a chlorine atom, a bromine atom, and an iodine atom.

Two of R¹, R², R³, and R⁴ that are adjacent may be bonded to each other, for example, condensed, to form a ring.

When they form a ring, the ring structure may be a 5- or 6-membered aliphatic ring, an aromatic ring, or a hetero ring containing an element other than a carbon atom, and the rings thus formed may further be combined to form a polycondensed ring or a spiro ring. Furthermore, these ring structures may further have a substituent such as each of those cited as examples for the monovalent substituents denoted by R¹ to R⁸ in Formula (I) above. Examples of the hetero atom when the ring structure thus formed is a hetero ring include N, O, and S.

With regard to the compound represented by Formula (I), at least one of R¹, R², R³, R⁴, R⁵, R⁶, R⁷, and R⁸ is a monovalent substituent.

The compound represented by Formula (I) is preferably a compound represented by Formula (I-A).

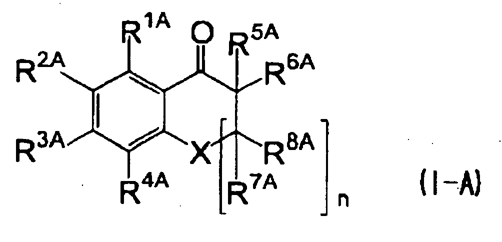

In Formula (I-A) above, X denotes O or S. n denotes an integer of 0 to 4. R^{1A}, R^{2A} , R^{3A} , R^{4A}, R^{5A}, R^{6A}, R^{7A}, and R^{8A} independently denote a hydrogen atom, a halogen atom, a hydroxy group, a cyano group, a nitro group, an amino group, an alkylthio group, a mono- or di-alkylamino group, an alkoxy group, an alkoxycarbonyl group, an acyloxy group, an acyl group, a carboxyl group, or a sulfo group. Furthermore, two of R^{1A}, R^{2A}, R^{3A}, and R^{4A} that are adjacent may be bonded to (condensed with) each other to form a ring.

When two of R^{1A}, R^{2A}, R^{3A} and R^{4A} that are adjacent are bonded to (condensed with) each other, they may form a 5- or 6-membered aliphatic ring or aromatic ring; these rings may be hetero rings containing an element other than a carbon atom, and the rings thus formed may further be combined to form a polycondensed ring or a spiro ring. Furthermore, these ring structures may further have a substituent such as each of those cited as examples for the monovalent substituent denoted by R¹ to R⁸ in Formula (I) above. Examples of the hetero atom when the ring structure is a hetero ring include N, O, and S.

The compound represented by Formula (I) is preferably a compound represented by Formula (I-B) below.

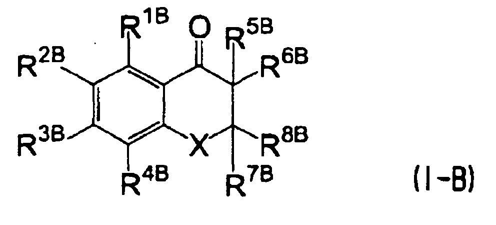

In Formula (I-B) above, X denotes O or S. R^{1B}, R^{2B}, R^{3B}, R^{4B}, R^{5B}, R^{6B}, R^{7B} and R^{8B} independently denote a hydrogen atom, a halogen atom, a hydroxy group, a cyano group, a nitro group, an amino group, an alkylthio group, a mono- or di-alkylamino group, an alkoxy group, an alkoxycarbonyl group, an acyloxy group, an acyl group, a carboxyl group, or a sulfo group. Furthermore, two of R^{1B}, R^{2B}, R^{3B}, and R^{4B} that are adjacent may be bonded to (condensed with) each other to form a ring.

When two of R^{1B}, R^{2B}, R^{3B}, and R^{4B} that are adjacent are bonded to (condensed with) each other, they may form a 5- or 6-membered aliphatic ring or aromatic ring; these rings may be hetero rings containing an element other than a carbon atom, and the rings thus formed may further be combined to form a polycondensed ring or a spiro ring. Furthermore, these ring structures may further have a substituent such as each of those cited as examples for the monovalent substituent denoted by R¹ to R⁸ in Formula (I) above. Examples of the hetero atom when the ring structure is a hetero ring include N, O, and S.

The compound represented by Formula (I) is preferably a compound represented by Formula (I-C) below.

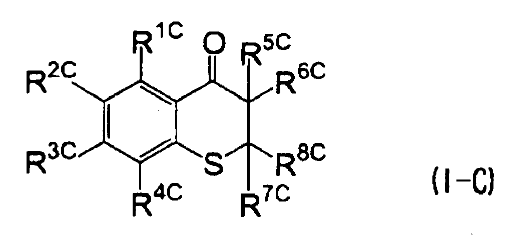

In Formula (I-C) above, R^{1C}, R^{2C}, R^{3C}, R^{4C}, R^{5C}, R^{6C}, R^{7C}, and R^{8C} independently denote a hydrogen atom, a halogen atom, a hydroxy group, a cyano group, a nitro group, an amino group, an alkylthio group, a mono- or di-alkylamino group, an alkoxy group, an alkoxycarbonyl group, an acyloxy group, an acyl group, a carboxyl group, or a sulfo group. Furthermore, two of R^{1C}, R^{2C}, R^{3C}, and R^{4C} that are adjacent may be bonded to (condensed with) each other to form a ring.

Two of R^{1C}, R^{2C}, R^{3C}, and R^{4C} that are adjacent may be condensed with each other to form a 5- or 6-membered aliphatic ring or aromatic ring; these rings may be hetero rings containing an element other than a carbon atom, and the rings thus formed may further be combined to form a polycondensed ring or a spiro ring. Furthermore, these ring structures may further have a substituent such as each of those cited as examples for the monovalent substituent denoted by R¹ to R⁸ in Formula (I) above. Examples of the hetero atom when the ring structure is a hetero ring include N, O, and S.

Specific examples (Compound Examples (I-1) to (I-131)) of the compound represented by Formula (I) that can suitably be used in the present invention are listed below, but the present invention is not limited thereto. In the specific examples below, Me denotes a methyl group, But denotes a *t*-butyl group, and Prⁱ denotes an isopropyl group. Furthermore, in the present invention, a hydrocarbon chain in some of the chemical formulae is represented by a simplified structural formula in which symbols for carbon (C) and hydrogen (H) are omitted.

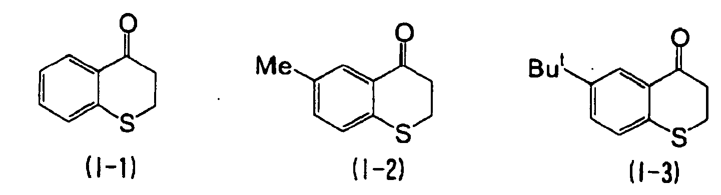

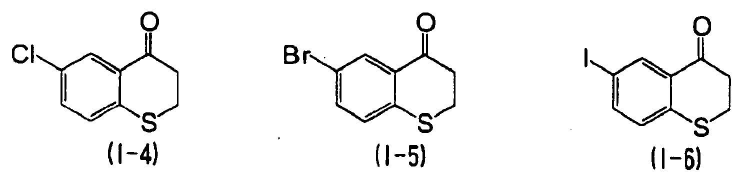

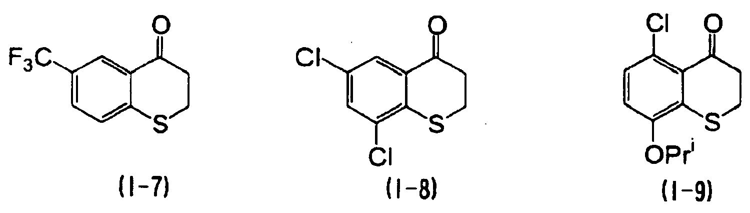

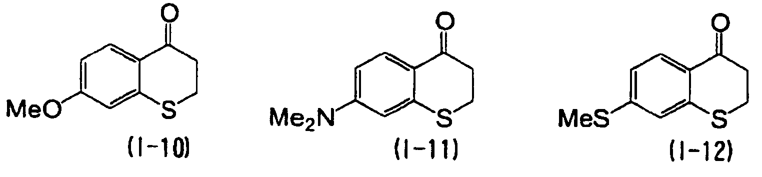

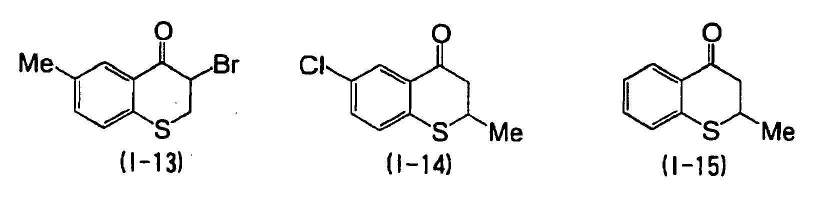

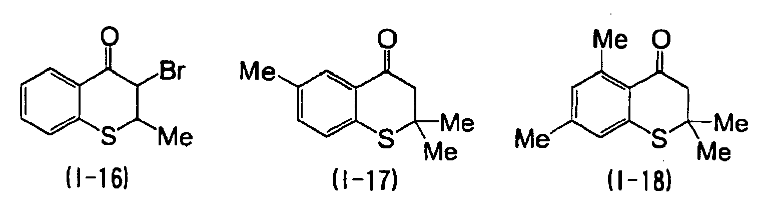

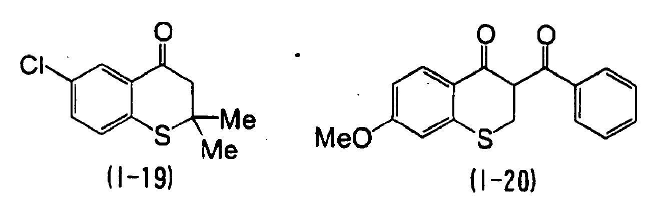

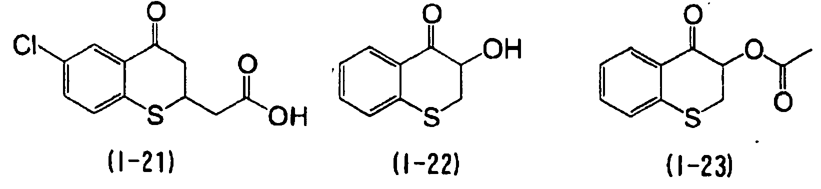

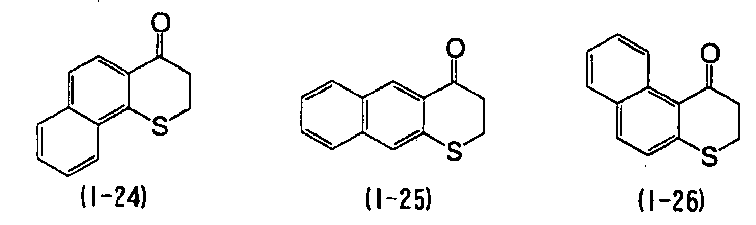

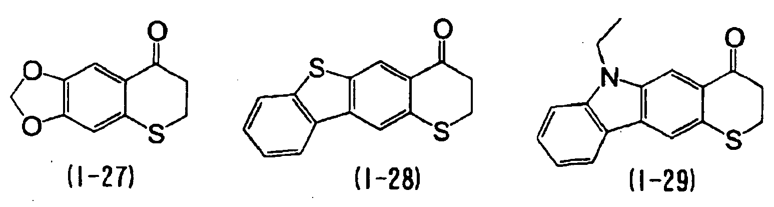

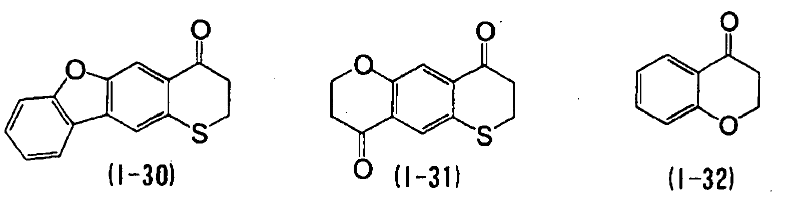

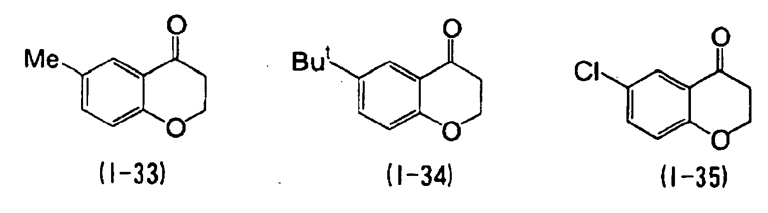

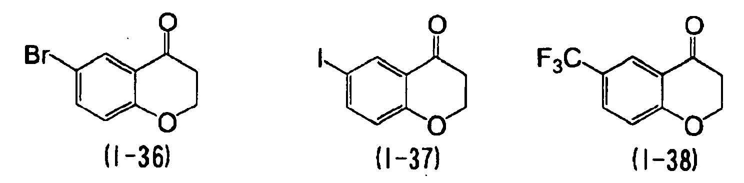

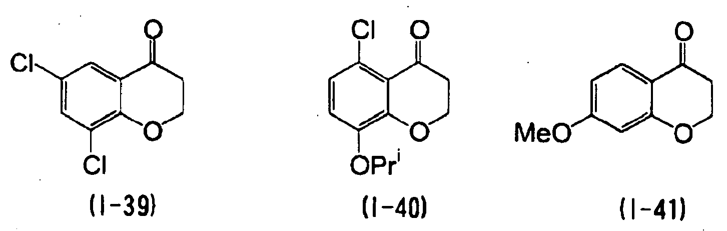

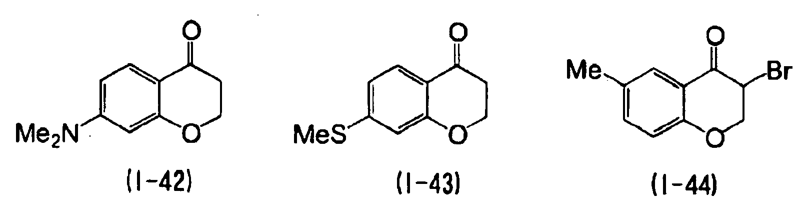

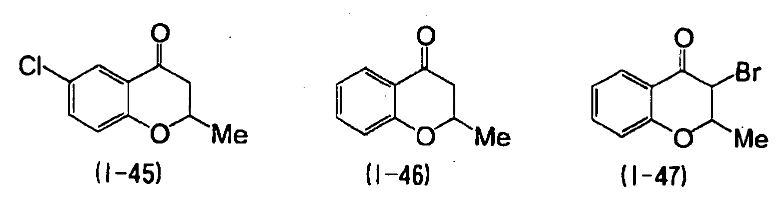

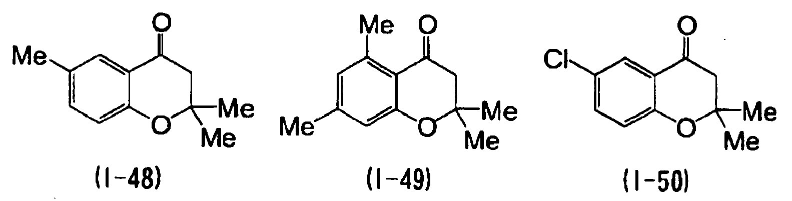

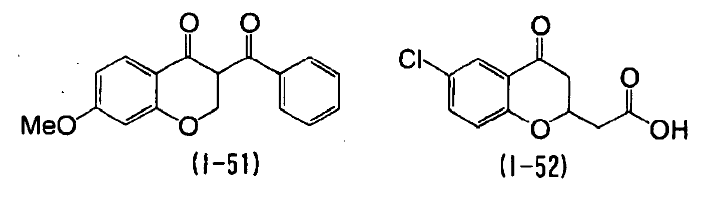

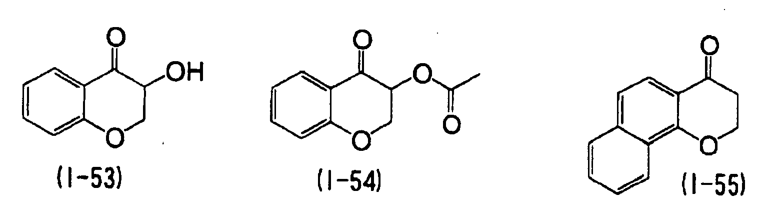

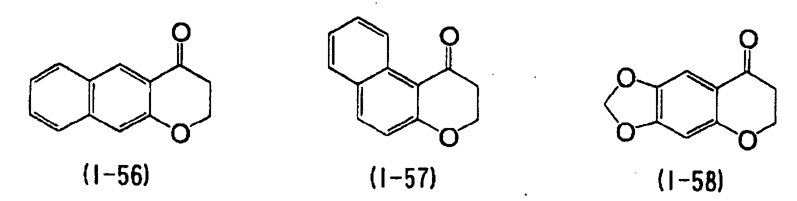

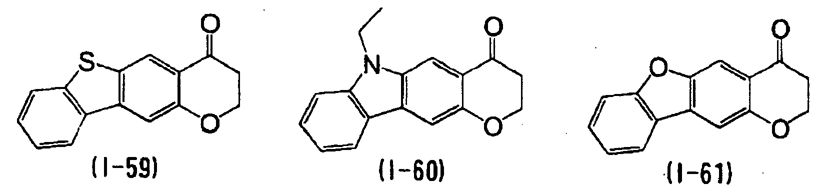

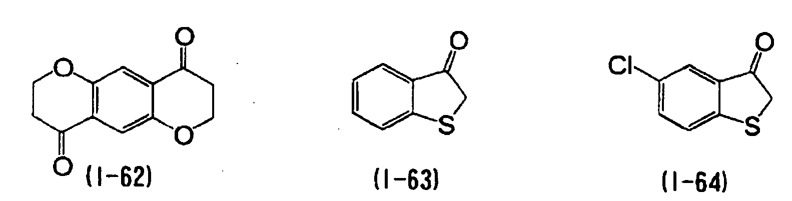

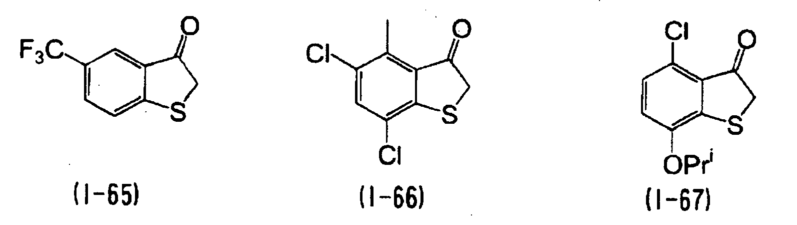

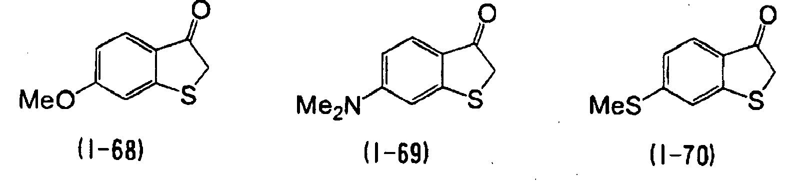

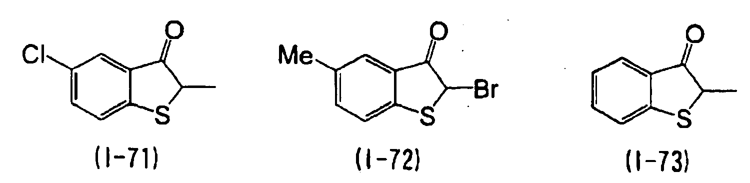

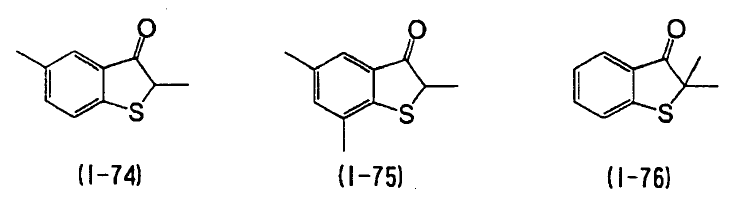

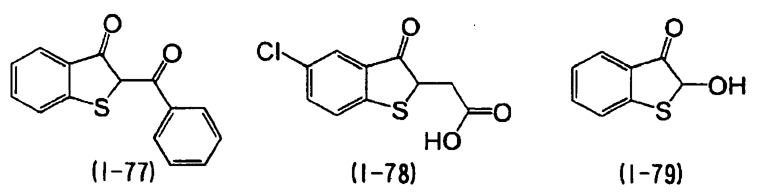

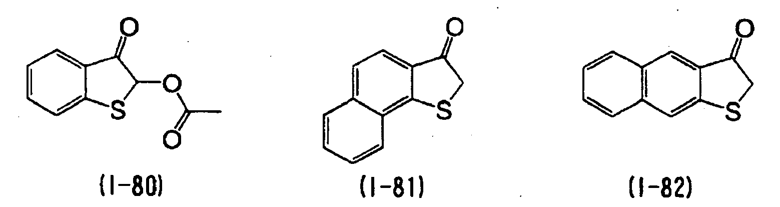

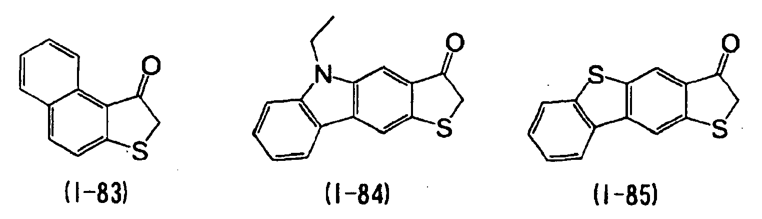

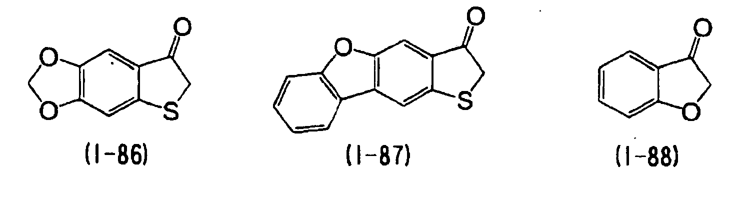

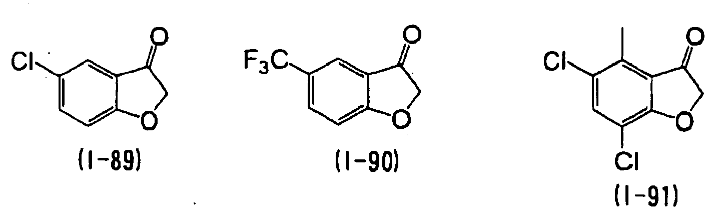

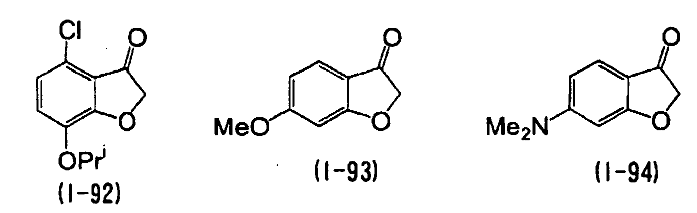

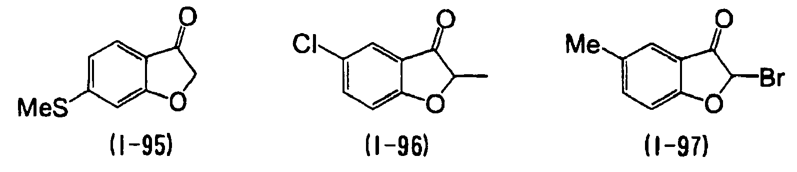

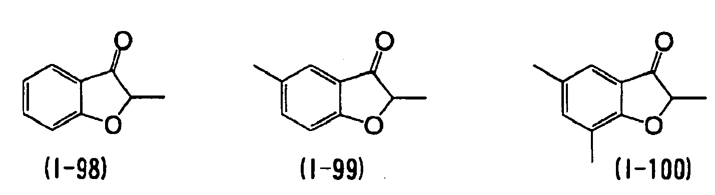

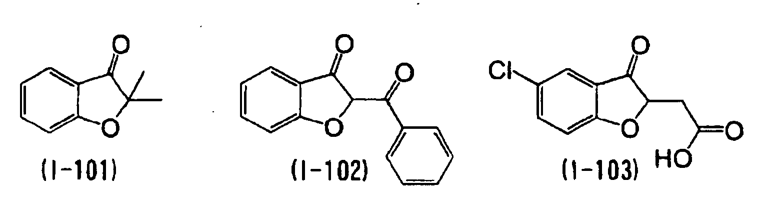

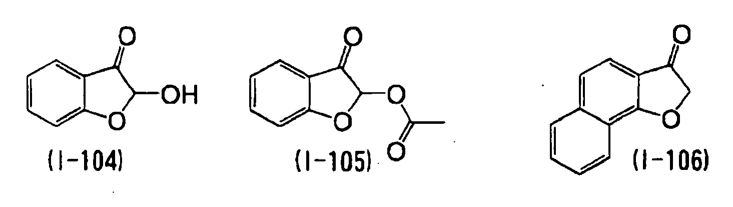

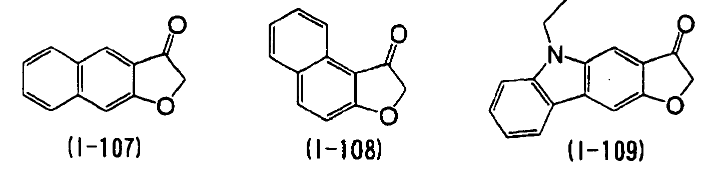

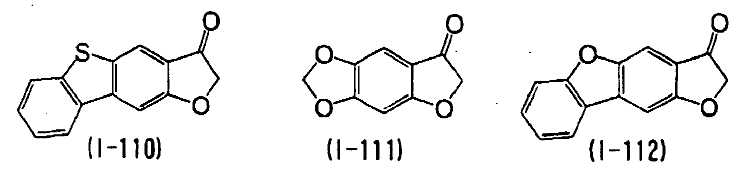

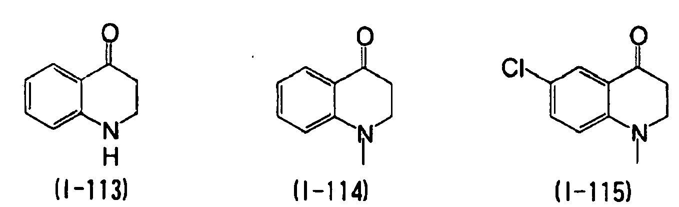

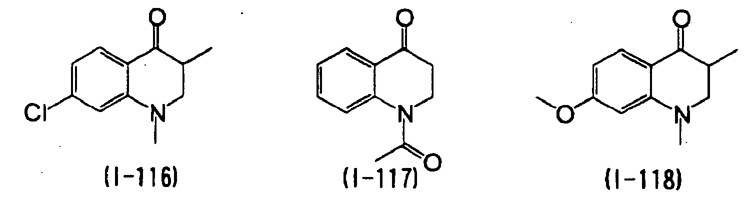

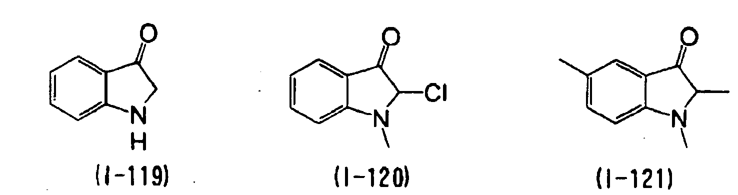

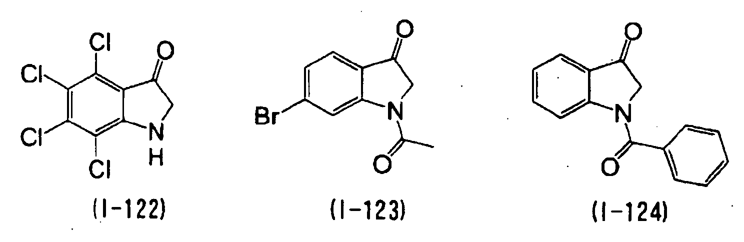

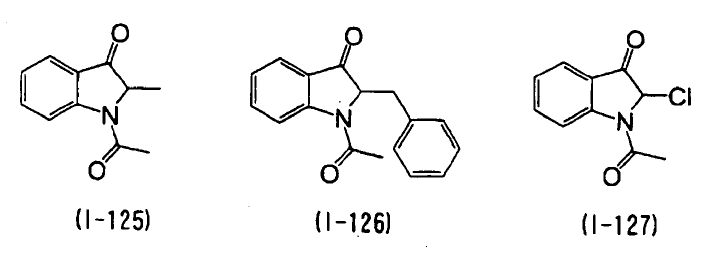

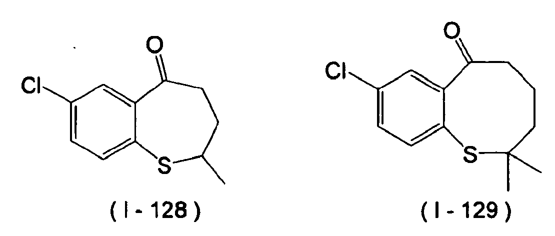

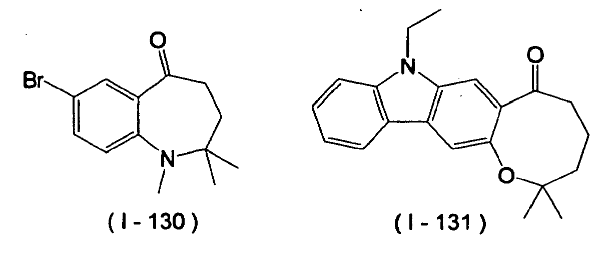

A method for synthesizing the compound represented by Formula (I) is not particularly limited; a known method may be used, and synthesis is possible by a known method described in, for example, JP-A-2004-189695, Tetrahedron, Vol. 49, p 939 (1993), Journal of Organic Chemistry, p. 893 (1945), and Journal of Organic Chemistry, p. 4939 (1965).

In the coating composition of the present invention the content of the compound represented by Formula (I), relative to the solids of the coating composition, is preferably on the order of 0.05 to 40 wt %, more preferably 0.1 to 30 wt %, and yet more preferably 0.2 to 25 wt %.

Since the compound represented by Formula (I) has hardly any adsorption in the visible light range, even if an amount such that an effect can be exhibited is added, there is no possibility of affecting the color of the coating composition, which is an advantage.

With respect to a photopolymerization initiator, which is described later, the content in the coating composition of the present invention, is an amount that satisfies a photopolymerization initiator:compound represented by Formula (I) ratio by weight of preferably 200:1 to 1:200, more preferably 50:1 to 1:50, and yet more preferably 20:1 to 1:5.

In general, a sensitizer absorbs specific actinic radiation and attains an electronically excited state. A sensitizer in the electronically excited state contacts a polymerization initiator to thus cause electron transfer, energy transfer, generation of heat., thereby promoting chemical change of the polymerization initiator, that is, decomposition and formation of an active species such as a radical, an acid, or a base, and the active species generated here causes and promotes polymerization and curing reactions of a polymerizable compound, which is described later.

In the coating composition of the present invention, the compound represented by Formula (I) used as a sensitizer may be a compound that is appropriate for the wavelength of actinic radiation that generates an initiating species from a photopolymerization initiator used in the coating composition of the present invention, but when taking into consideration use in the curing reaction of the coating composition of the present invention, it is preferable to use one having an absorption wavelength in a range of 300 nm to 450 nm.

From the viewpoint of transparency, it is preferable to use as the compound represented by Formula (I) a compound having an absorbance at a wavelength of 400 nm of no greater than 0.3 when the compound represented by Formula (I) is formed into a film having a thickness of 1 g/cm², and the absorbance is more preferably no greater than 0.2, and yet more preferably no greater than 0.1.

### Other sensitizer

In the present invention, in addition to the compound represented by Formula (I), a known sensitizer may be used in combination therewith as long as the effects of the present invention are not impaired.

When another sensitizer is used, the amount of said other sensitizer used, relative to the compound represented by Formula (I), is preferably 1:5 to 100:1 as a compound represented by Formula (I):said other sensitizer ratio by weight, more preferably 1:1 to 100:1, and yet more preferably 2:1 to 100:1.

Examples of the known sensitizer that can be used in combination include benzophenone, thioxanthone, isopropylthioxanthone, anthraquinone, a 3-acylcoumarin derivative, terphenyl, a styryl ketone, 2-(aroylmethylene)thiazoline, camphorquinone, eosin, rhodamine, and erythrosine.

Further examples of the sensitizer that can be used in combination are as follows.

### (1) Thioxanthones

Thioxanthone, 2-isopropylthioxanthone, 2-chlorothioxanthone, 2-dodecylthioxanthone, 2,4-diethylthioxanthone, 2,4-dimethylthioxanthone, 1-methoxycarbonylthioxanthone, 2-ethoxycarbonylthioxanthone, 3-(2-methoxyethoxycarbonyl)thioxanthone, 4-butoxycarbonylthioxanthone, 3-butoxycarbonyl-7-methylthioxanthone, 1-cyano-3-chlorothioxanthone, 1-ethoxycarbonyl-3-chlorothioxanthone, 1-ethoxycarbonyl-3-ethoxythioxanthone, 1-ethoxycarbonyl-3-aminothioxanthone, 1-ethoxycarbonyl-3-phenylsulfurylthioxanthone, 3,4-di-[2-(2-methoxyethoxy)ethoxycarbonyl]thioxanthone, 1-ethoxycarbonyl-3-(1-methyl-1-morpholinoethyl)thioxanthone, 2-methyl-6-dimethoxymethylthioxanthone, 2-methyl-6-(1,1-dimethoxybenzyl)thioxanthone, 2-morpholinomethylthioxanthone, 2-methyl-6-morpholinomethylthioxanthone, *n*-allylthioxanthone-3,4-dicarboximide, *n*-octylthioxanthone-3,4-dicarboximide, *N*-(1,1,3,3-tetramethylbutyl)thioxanthone-3,4-dicarboximide, 1-phenoxythioxanthone, 6-ethoxycarbonyl-2-methoxythioxanthone, 6-ethoxycarbonyl-2-methylthioxanthone, thioxanthone-2-polyethylene glycol ester, and 2-hydroxy-3-(3,4-dimethyl-9-oxo-9H-thioxanthon-2-yl)-*N,N,N-*trimethyl-1-propanaminiu m chloride;

### (2) benzophenones

benzophenone, 4-phenylbenzophenone, 4-methoxybenzophenone, 4,4'-dimethoxybenzophenone, 4,4'-dimethylbenzophenone, 4,4'-dichlorobenzophenone, 4,4'-dimethylaminobenzophenone, 4,4'-diethylaminobenzophenone, 4-methylbenzophenone, 2,4,6-trimethylbenzophenone, 4-(4-methylthiophenyl)benzophenone, 3,3'-dimethyl-4-methoxybenzophenone, methyl-2-benzoylbenzoate, 4-(2-hydroxyethylthio)benzophenone, 4-(4-tolylthio)benzophenone, 4-benzoyl-*N,N,N-*trimethylbenzenemethanaminium chloride, 2-hydroxy-3-(4-benzoylphenoxy)-*N,N,N*-trimethyl-1-propanaminium chloride monohydrate, 4-(13-acryloyl-1,4,7,10,13-pentaoxatridecyl)benzophenone, and 4-benzoyl-*N,N*-dimethyl-*N*-[2-(1-oxo-2-propenyl)oxy]ethylbenzenemethanaminium chloride;

### (3) 3-acylcoumarins

3-benzoylcoumarin, 3-benzoyl-7-methoxycoumarin, 3-benzoyl-5,7-di(propoxy)coumarin, 3-benzoyl-6,8-dichlorocoumarin, 3-benzoyl-6-chlorocoumarin, 3,3'-carbonylbis[5,7-di(propoxy)coumarin], 3,3'-carbonylbis(7-methoxycoumarin), 3,3'-carbonylbis(7-diethylaminocoumarin), 3-isobutyroylcoumarin, 3-benzoyl-5,7-dimethoxycoumarin, 3-benzoyl-5,7-diethoxycoumarin, 3-benzoyl-5,7-dibutoxycoumarin, 3-benzoyl-5,7-di(methoxyethoxy)coumarin, 3-benzoyl-5,7-di(allyloxy)coumarin, 3-benzoyl-7-dimethylaminocoumarin, 3-benzoyl-7-diethylaminocoumarin, 3-isobutyroyl-7-dimethylaminocoumarin, 5,7-dimethoxy-3-(1-naphthoyl)coumarin, 5,7-dimethoxy-3-(1-naphthoyl)coumarin, 3-benzoylbenzo[f]coumarin, 7-diethylamino-3-thienoylcoumarin, and 3-(4-cyanobenzoyl)-5,7-dimethoxycoumarin;

### (4) 2-(aroylmethylene)thiazolines

3-methyl-2-benzoylmethylene-β-naphthothiazoline, 3-methyl-2-benzoylmethylenebenzothiazoline, and 3-ethyl-2-propionylmethylene-p-naphthothiazoline;

### (5) anthracenes

9,10-dimethoxyanthracene, 9,10-diethoxyanthracene, and 9,10-dimethoxy-2-ethylanthracene;

### (6) other carbonyl compounds

acetophenone, 3-methoxyacetophenone, 4-phenylacetophenone, benzil, 2-acetylnaphthalene, 2-naphthaldehyde, 9,10-naphthoquinone, 9-fluorenone, dibenzosuberone, xanthone, 2,5-bis(4-diethylaminobenzylidene)cyclopentanone, an a-(para-dimethylaminobenzylidene) ketone such as, for example, 2-(4-dimethylaminobenzylidene)indan-1-one or 3-(4-dimethylaminophenyl)-1-indan-5-ylpropenone, 3-phenylthiophthalimide, and N-methyl-3,5-di(ethylthio)phthalimide.

### (B) Photopolymerization initiator

The coating composition of the present invention comprises a photopolymerization initiator.

As the photopolymerization initiator, a known polymerization initiator may be used. In the present invention, it is preferable to use a radical photopolymerization initiator.

The photopolymerization initiator used in the coating composition of the present invention is a compound that absorbs actinic radiation and generates a polymerization initiating species. Examples of the actinic radiation used for initiating polymerization include γ-rays, β-rays, an electron beam, UV rays, visible light, and IR rays. The wavelength used is not particularly limited, but is preferably a wavelength range of 200 to 500 nm, and more preferably 200 to 450 nm.

### Radical photopolymerization initiator

Preferred examples of the radical photopolymerization initiator that can be used in the present invention include (a) aromatic ketones, (b) acylphosphine compounds, (c) aromatic onium salt compounds, (d) organic peroxides, (e) thio compounds, (f) hexaarylbiimidazole compounds, (g) ketoxime ester compounds, (h) borate compounds, (i) azinium compounds, (j) metallocene compounds, (k) active ester compounds, (l) carbon-halogen bond-containing compounds, and (m) alkylamine compounds.

Specific examples of the radical photopolymerization initiators above include radical photopolymerization initiators described in Paragraph Nos. 0135 to 0208 of the specification of JP-A-2006-085049.

As a photopolymerization initiator that is preferable from the viewpoint of transparency, when the photopolymerization initiator is made into a 3 g/cm² thick film, a compound with an absorbance at a wavelength of 400 nm of no greater than 0.3 is preferable; it is more preferably no greater than 0.2, and yet more preferably no greater than 0.1.

With regard to the radical photopolymerization initiator, one type thereof may be used on its own or two or more types may be used in combination.

Among the above, from the viewpoint of the relationship with the compound represented by Formula (I) used in the present invention and transparency, it is preferable to use as the photopolymerization initiator an α-aminoketone-based compound and/or an acylphosphine oxide-based compound, and it is particularly preferable to use an α-aminoketone-based compound and an acylphosphine oxide-based compound in combination.

The α-aminoketone-based compound is preferably a compound represented by Formula (1) below.

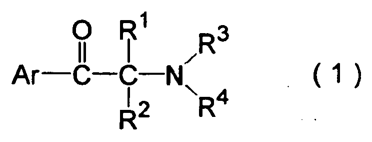

In Formula (1) above, Ar is a phenyl group substituted with -SR¹³ or -N(R⁷)(R⁸), and R¹³ denotes a hydrogen atom or an alkyl group.

R¹ and R² independently denote an alkyl group having 1 to 8 carbons. R¹ and R² may be bonded to each other to form an alkylene group having 2 to 9 carbons.

R³ and R⁴ independently denote a hydrogen atom, an alkyl group having 1 to 12 carbons, an alkyl group having 2 to 4 carbons substituted with an alkoxy group having 1 to 4 carbons, or an alkenyl group having 3 to 5 carbons. Here, R³ and R⁴ may be bonded to each other to form an alkylene group having 3 to 7 carbons, the alkylene group may contain -O- or -N(R¹²)- in the alkylene chain, and R¹² denotes an alkyl group having 1 to 4 carbons.

R⁷ and R⁸ independently denote a hydrogen atom, an alkyl group having 1 to 12 carbons, an alkyl group having 2 to 4 carbons substituted with an alkoxy group having 1 to 4 carbons, or an alkenyl group having 3 to 5 carbons. Here, R⁷ and R⁸ may be bonded to each other to form an alkylene group having 3 to 7 carbons, and the alkylene group may contain -O- or -N(R¹²)- in the alkylene chain. Here, R¹² has the same meaning as above.

Examples of compounds encompassed by the α-aminoketones include 2-methyl-1-phenyl-2-morpholinopropan-1-one, 2-methyl-1-(4-hexylphenyl)-2-morpholinopropan-1-one, and 2-ethyl-2-dimethylamino-1-(4-morpholinophenyl)butan-1-one. Furthermore, there are commercially available products such as the IRGACURE series manufactured by Ciba-Geigy Ltd., such as IRGACURE 907, IRGACURE 369, and IRGACURE 379, and they are included in the α-aminoketones and can be used suitably in the present invention.

As the acylphosphine oxide-based compounds, compounds represented by Formula (2) or Formula (3) below are preferable.

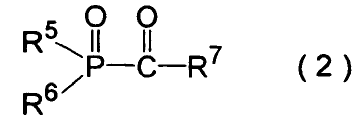

In Formula (2) above, R⁵ and R⁶ independently denote an aliphatic group, an aromatic group, an aliphatic oxy group, an aromatic oxy group, or a heterocyclic group, and R⁷ denotes an aliphatic group, an aromatic group, or a heterocyclic group.

Examples of the aliphatic group denoted by R⁵, R⁶, or R⁷ above include an alkyl group, a substituted alkyl group, an alkenyl group, a substituted alkenyl group, an alkynyl group, a substituted alkynyl group, an aralkyl group, and a substituted aralkyl group; among them an alkyl group, a substituted alkyl group, an alkenyl group, a substituted alkenyl group, an aralkyl group, and a substituted aralkyl group are preferable, and an alkyl group and a substituted alkyl group are particularly preferable. Furthermore, the aliphatic group may be a cyclic aliphatic group or an open-chain aliphatic group. The open-chain aliphatic group may be branched.

Examples of the alkyl group include straight chain, branched, and cyclic alkyl groups, and the number of carbons of the alkyl group is preferably 1 to 30, and more preferably 1 to 20. A preferred number of carbons for the alkyl moiety of the substituted alkyl group is the same as that for the alkyl group. Furthermore, the alkyl group may be either a substituted alkyl group or an unsubstituted alkyl group. Examples of the alkyl group include a methyl group, an ethyl group, a propyl group, a butyl group, a pentyl group, a hexyl group, an octyl group, a 2-ethylhexyl group, a decyl group, a dodecyl group, an octadecyl group, a cyclohexyl group, a cyclopentyl group, a neopentyl group, an isopropyl group, and an isobutyl group.

Examples of a substituent of the substituted alkyl group include a carboxyl group, a sulfo group, a cyano group, a halogen atom (e.g. a fluorine atom, a chlorine atom, or a bromine atom), a hydroxy group, an alkoxycarbonyl group having no greater than 30 carbons (e.g. a methoxycarbonyl group, an ethoxycarbonyl group, or a benzyloxycarbonyl group), an alkylsulfonylaminocarbonyl group having no greater than 30 carbons, an arylsulfonylaminocarbonyl group, an alkylsulfonyl group, an arylsulfonyl group, an acylaminosulfonyl group having no greater than 30 carbons, an alkoxy group having no greater than 30 carbons (e.g. a methoxy group, an ethoxy group, a benzyloxy group, a phenoxyethoxy group, or a phenethyloxy group), an alkylthio group having no greater than 30 carbons (e.g. a methylthio group, an ethylthio group, or a methylthioethylthioethyl group), an aryloxy group having no greater than 30 carbons (e.g. a phenoxy group, a *p*-tolyloxy group, a 1-naphthoxy group, or a 2-naphthoxy group), a nitro group, an alkyl group having no greater than 30 carbons, an alkoxycarbonyloxy group, an aryloxycarbonyloxy group, an acyloxy group having no greater than 30 carbons (e.g. an acetyloxy group or a propionyloxy group), an acyl group having no greater than 30 carbons (e.g. an acetyl group, a propionyl group, or a benzoyl group), a carbamoyl group (e.g. a carbamoyl group, an *N,N*-dimethylcarbamoyl group, a morpholinocarbonyl group, or a piperidinocarbonyl group), a sulfamoyl group (e.g. a sulfamoyl group, an *N,N*-dimethylsulfamoyl group, a morpholinosulfonyl group, or a piperidinosulfonyl group), a substituted amino group (e.g. an amino group, an alkylamino group, a dialkylamino group, an arylamino group, a diarylamino group, or an acylamino group), a substituted ureido group, a substituted phosphono group, and a heterocyclic group. Here, the carboxyl group, the sulfo group, the hydroxy group, and the phosphono group may be in salt form. In this case, as a cation forming the salt, preferred examples thereof include an organic cation (e.g. primary to quaternary ammonium), a transition metal coordination complex cation (a compound described in Japanese registered patent 2791143), and a metal cation (e.g. Na⁺, K⁺, Li⁺, Ag⁺, Fe²⁺, Fe³⁺, Cu⁺, Cu²⁺, Zn²⁺, or Al³⁺).

Examples of the alkenyl group include straight chain, branched, or cyclic alkenyl groups, and the number of carbons of the alkenyl group is preferably 2 to 30, and more preferably 2 to 20. Furthermore, the alkenyl group may be either a substituent-containing substituted alkenyl group or an unsubstituted alkenyl group, and a preferred range for the number of carbons of the alkenyl moiety of the substituted alkenyl group is the same as for the alkenyl group. Examples of the substituent of the substituted alkenyl group include an aryl group having no greater than 30 carbons (e.g. a phenyl group, a 4-chlorophenyl group, a 4-methylphenyl group, or an α-naphthyl group) and the same substituents as for the substituted alkyl group.

Examples of the alkynyl group include straight chain, branched, or cyclic alkynyl groups, and the number of carbons of the alkynyl group is preferably 2 to 30, and more preferably 2 to 20. Furthermore, the alkynyl group may be either a substituent-containing substituted alkynyl group or an unsubstituted alkynyl group, and a preferred range for the number of carbons of the alkynyl moiety of the substituted alkynyl group is the same as for the alkynyl group. Examples of the substituent of the substituted alkynyl group include the same substituents as for the alkenyl group.

Examples of the aralkyl group include straight chain, branched, or cyclic aralkyl groups, and the number of carbons of the aralkyl group is preferably 7 to 35, and more preferably 7 to 25. Furthermore, the aralkyl group may be either a substituent-containing substituted aralkyl group or an unsubstituted aralkyl group, and a preferred range for the number of carbons of the aralkyl moiety of the substituted aralkyl group is the same as for the aralkyl group. Examples of the substituent of the substituted aralkyl group include the same substituents as for the alkenyl group.

Examples of the aromatic group denoted by R⁵, R⁶, or R⁷ above include an aryl group and a substituted aryl group. The number of carbons of the aryl group is preferably 6 to 30, and more preferably 6 to 20. A preferred range for the number of carbons of the aryl moiety of the substituted aryl group is the same as for the aryl group. Specific examples of the aryl group include a phenyl group, an α-naphthyl group, and a β-naphthyl group. Examples of a substituent of the substituted aryl group include the same substituents as for the alkenyl group.

Examples of the aliphatic oxy group denoted by R⁵ or R⁶ above include substituted or unsubstituted alkoxy groups, alkenyloxy groups, alkynyloxy groups, and aralkyloxy groups; a substituted or unsubstituted alkoxy group having 1 to 30 carbons is preferable, and specific examples thereof include a methoxy group, an ethoxy group, a butoxy group, an octyloxy group, and a phenoxyethoxy group. However, the aliphatic oxy group is not limited thereto.

Examples of the aromatic oxy group denoted by R⁵ or R⁶ above include substituted or unsubstituted aryloxy groups; a substituted or unsubstituted aryloxy group having 6 to 30 carbons is preferable, and specific examples thereof include a phenoxy group, a methylphenyloxy group, a chlorophenyloxy group, a methoxyphenyloxy group, and an octyloxyphenyloxy group. However, the aromatic oxy group is not limited thereto.

Preferred examples of the heterocyclic group denoted by R⁵, R⁶ or R⁷ above include N, O, or S atom-containing heterocyclic groups, and specific examples thereof include a pyridyl group, a furyl group, a thienyl group, an imidazolyl group, and a pyrrolyl group.

Furthermore, the compound represented by Formula (2) may be bonded, via R⁵, R⁶ or R⁷, to another compound represented by Formula (2) to thus form a multimer having 2 or more acylphosphine structures.

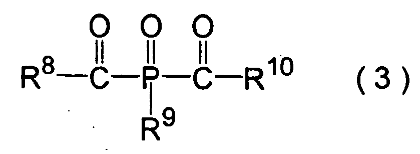

R⁸ and R¹⁰ in Formula (3) above independently denote an alkyl group, an aryl group, or a heterocyclic group, and R⁹ denotes an alkyl group, an aryl group, an alkoxy group, an aryloxy group, or a heterocyclic group. The alkyl group, aryl group, heterocyclic group, alkoxy group, and aryloxy group denoted by R⁸, R⁹, or R¹⁰ above may have a substituent, and examples of the substituent include the same substituents as for Formula (2).

The alkyl group, aryl group, heterocyclic group, alkoxy group, and aryloxy group in Formula (3) above have the same meanings as for Formula (2) above.

Furthermore, the compound represented by Formula (3) may be bonded, via R⁸, R⁹, or R¹⁰, to another compound represented by Formula (3) to thus form a multimer having 2 or more acylphosphine structures.

Moreover, examples of the acylphosphine oxide-based compound denoted by Formula (2) or Formula (3) above include compounds described in JP-B-63-40799 (JP-B denotes a Japanese examined patent application publication), JP-B-5-29234, JP-A-10-95788, and JP-A-10-29997.

Specific examples of the acylphosphine oxide-based compound include the compounds described below (Compound Examples (P-1) to (P-26)), but in the present invention the acylphosphine oxide-based compound is not limited thereto.

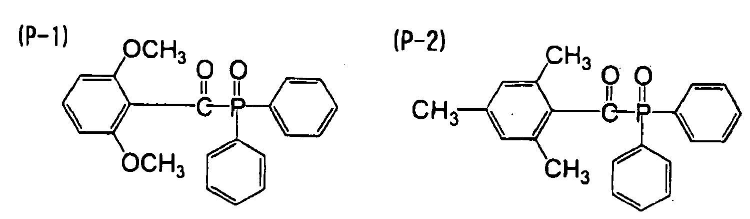

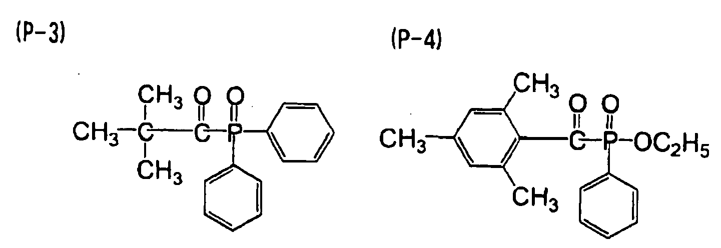

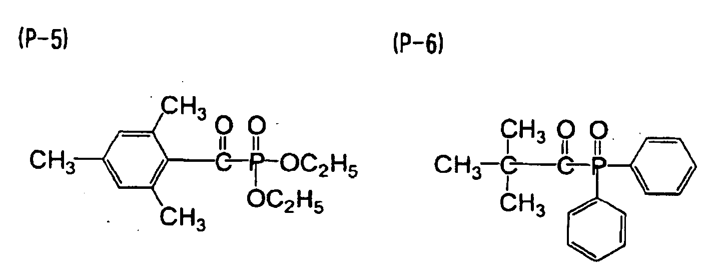

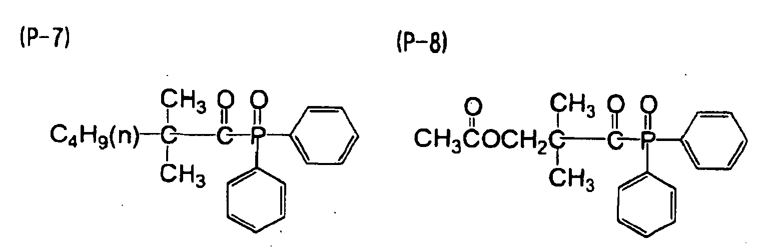

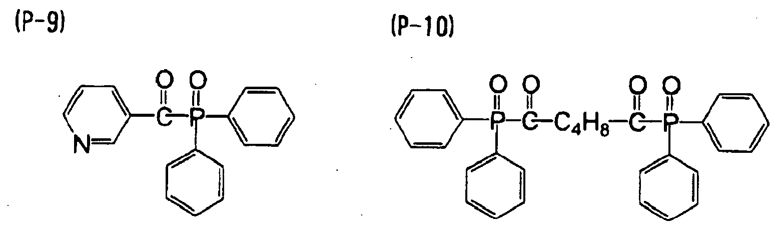

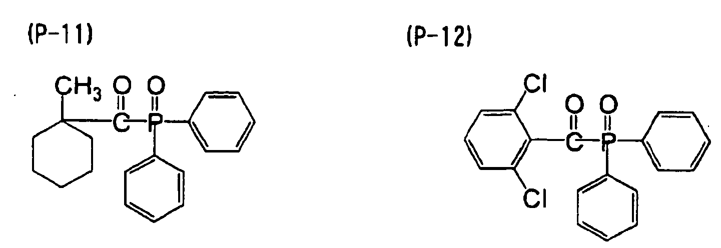

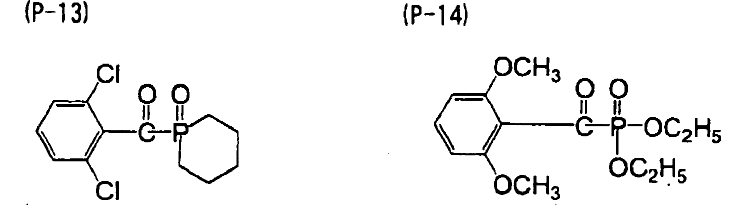

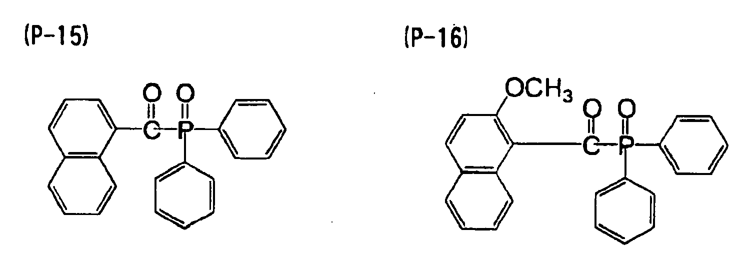

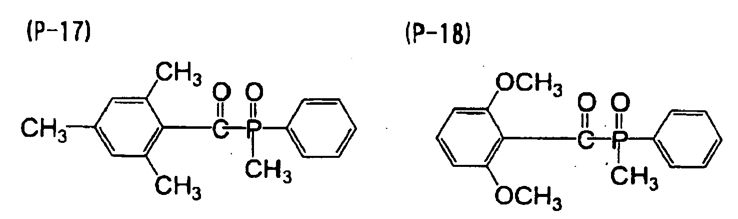

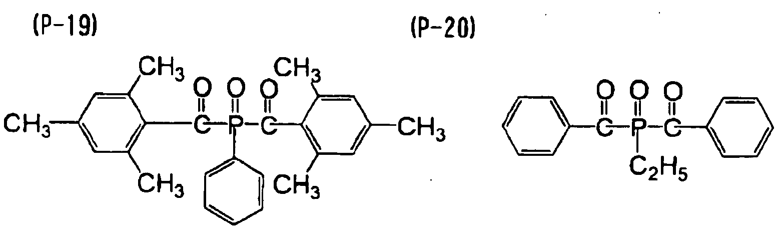

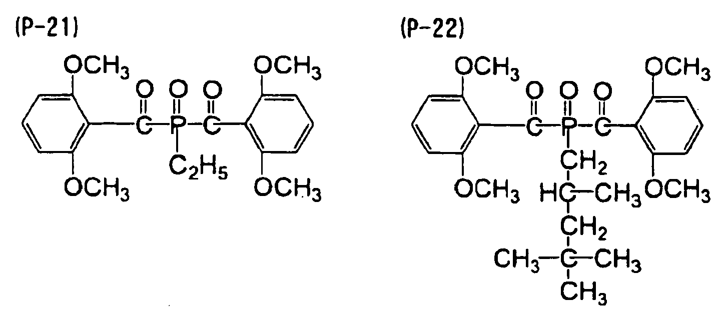

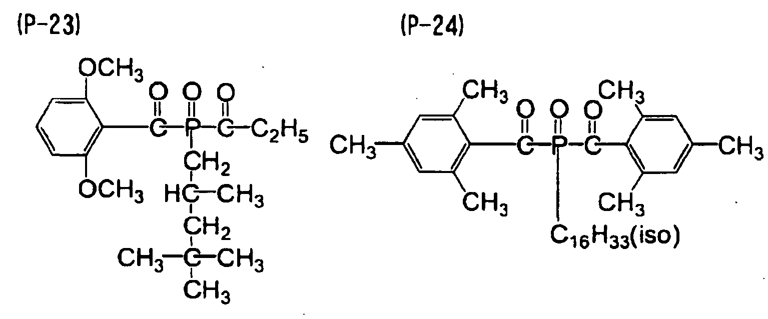

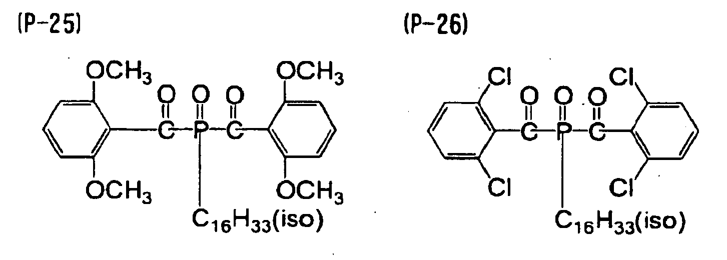

Among the Compound Examples above, for example, (P-2): 2,4,6-trimethylbenzoyldiphenylphosphine oxide is available under the product name DAROCUR TPO (Ciba Specialty Chemicals), and (P-19): bis(2,4,6-trimethylbenzoyl)phenylphosphine oxide is available under the product name IRGACURE 819 (Ciba Specialty Chemicals).

The photocurable coating composition of the present invention may employ as a photopolymerization initiator a photopolymerization initiator other than the α-aminoketone-based compound and the acylphosphine oxide-based compound, or may employ them in combination.

Examples of a known polymerization initiator that can be used in combination include camphorquinone, benzophenone, benzophenone derivatives, acetophenone, acetophenone derivatives such as α-hydroxycycloalkyl phenyl ketones and 2-hydroxy-2-methyl-1-phenylpropanone, dialkoxyacetophenones, α-hydroxy- or 4-aroyl-1,3-dioxolanes, benzoin alkyl ethers, benzil ketals such as benzildimethyl ketal, phenyl glyoxylate and derivatives thereof, dimer phenyl glyoxylate, peresters such as benzophenonetetracarboxylic acid peresters (e.g. those described in EP Patent No. 126,541), halomethyltriazines such as 2-[2-(4-methoxyphenyl)vinyl]-4,6-bistrichloromethyl-1,3,5-triazine, 2-(4-methoxyphenyl)-4,6-bistrichloromethyl-1,3,5-triazine, 2-(3,4-dimethoxyphenyl)-4,6-bistrichloromethyl-1,3,5-triazine, and 2-methyl-4,6-bistrichloromethyl-1,3,5-triazine, a hexaarylbisimidazole/co-initiator system such as *ortho*-chlorohexaphenylbisimidazole in combination with 2-mercaptobenzothiazole; a ferrocenium compound or titanocene such as dicyclopentadienylbis(2,6-difluoro-3-pyrrolophenyl)titanium; and a mixture with an O-acyloxime ester compound described in GB Patent No. 2,339,571. As a co-initiator, a boric acid compound may also be used.

The content of the photopolymerization initiator in the photocurable coating composition of the present invention, on a solids basis, is preferably in the range of 0.1 to 30 wt %, and more preferably in the range of 0.2 to 20 wt %.

In the present invention, as a cationic polymerization initiator (photo-acid generator) that is used in combination with a cationically polymerizable compound, for example, compounds that are used for chemically amplified photoresists or cationic photopolymerization are used ('Imejingu you Yukizairyou' (Organic Materials for Imaging), Ed. The Japanese Research Association for Organic Electronics Materials, Bunshin Publishing Co. (1993), pp. 187-192).

Examples of cationic polymerization initiators that are suitable in the present invention are as follows.

That is, firstly, there can be cited B(C₆F₅)₄⁻, PF₆⁻, AsF₆⁻, SbF₆⁻, CF₃SO₃⁻ salts of diazonium, ammonium, iodinium, sulfonium, phosphonium, aromatic onium compounds. Secondly, there can be cited sulfonated materials that generate a sulfonic acid. Thirdly, halides that photogenerate a hydrogen halide can also be used. Fourthly, iron arene complexes can be used.

With regard to the cationic polymerization initiator, one type thereof may be used on its own or two or more types may be used in combination.

### (C) Compound having ethylenically unsaturated bond

The coating composition of the present invention comprises (C) a compound having an ethylenically unsaturated bond.

The compound having an ethylenically unsaturated bond that can be used in the present invention is not particularly limited as long as it is a radically polymerizable or cationically polymerizable compound.

In the present invention, the radically polymerizable compound may be any compound as long as it has at least one ethylenically unsaturated bond, and a monomer, an oligomer, a polymer, are included.

With regard to the radically polymerizable compound, one type thereof may be used or, in order to improve intended properties, two or more types may be used in combination at any ratio. From the viewpoint of controlling reactivity, physical properties, it is preferable to use two or more types of radically polymerizable compounds in combination.

Examples of the radically polymerizable compound include unsaturated carboxylic acids such as acrylic acid, methacrylic acid, itaconic acid, crotonic acid, isocrotonic acid, and maleic acid, and salts thereof, anhydrides having an ethylenically unsaturated bond, acrylonitrile, styrene, various types of unsaturated polyesters, unsaturated polyethers, unsaturated polyamides, and unsaturated urethanes.

Specific examples thereof include acrylic acid derivatives such as methyl acrylate, ethyl acrylate, *n*-butyl acrylate, 2-ethylhexyl acrylate, 2-hydroxyethyl acrylate, butoxyethyl acrylate, carbitol acrylate, cyclohexyl acrylate, tetrahydrofurfuryl acrylate, benzyl acrylate, bis(4-acryloxypolyethoxyphenyl)propane, neopentyl glycol diacrylate, 1,6-hexanediol diacrylate, ethylene glycol diacrylate, diethylene glycol diacrylate, triethylene glycol diacrylate, tetraethylene glycol diacrylate, polyethylene glycol diacrylate, polypropylene glycol diacrylate, pentaerythritol triacrylate, pentaerythritol tetraacrylate, dipentaerythritol tetraacrylate, trimethylolpropane triacrylate, tetramethylolmethane tetraacrylate, oligoester acrylate, N-methylolacrylamide, diacetoneacrylamide, and epoxyacrylate, methacrylic derivatives such as methyl methacrylate, *n*-butyl methacrylate, 2-ethylhexyl methacrylate, lauryl methacrylate, allyl methacrylate, glycidyl methacrylate, benzyl methacrylate, dimethylaminomethyl methacrylate, 1,6-hexanediol dimethacrylate, ethylene glycol dimethacrylate, triethylene glycol dimethacrylate, polyethylene glycol dimethacrylate, polypropylene glycol dimethacrylate, trimethylolethane trimethacrylate, trimethylolpropane trimethacrylate, and 2,2-bis(4-methacryloxypolyethoxyphenyl)propane, N-vinyl compounds such as N-vinylpyrrolidone and N-vinylcaprolactam, allyl compound derivatives such as allyl glycidyl ether, diallyl phthalate, and triallyl trimellitate and, more specifically, radically polymerizable or crosslinking monomers, oligomers, and polymers that are commercial products or are industrially known, such as those described in 'Kakyozai Handobukku' (Crosslinking Agent Handbook), Ed. S. Yamashita (Taiseisha, 1981); 'UV·EB Koka Handobukku' (UV·EB Curing Handbook) (Starting Materials) Ed. K. Kato (Kobunshi Kankoukai, 1985); 'UV·EB Koka Gijutsu no Oyo to Shijyo' (Application and Market of UV·EB Curing Technology), p. 79, Ed. Rad Tech (CMC, 1989); and E. Takiyama 'Poriesuteru Jushi Handobukku' (Polyester Resin Handbook), (The Nikkan Kogyo Shimbun Ltd., 1988) may be used.

Furthermore, as the radically polymerizable compound, photocuring polymerizable compound materials used in photopolymerizable compositions described in, for example, JP-A-7-159983, JP-B-7-31399, JP-A-8-224982, JP-A-10-863, JP-A-9-134011, are known, and they may be used in the coating composition of the present invention.

Moreover, as the radically polymerizable compound, a vinyl ether compound is also preferably used. Examples of vinyl ether compounds that can suitably be used include di- or tri-vinyl ether compounds such as ethylene glycol divinyl ether, diethylene glycol divinyl ether, triethylene glycol divinyl ether, propylene glycol divinyl ether, dipropylene glycol divinyl ether, butanediol divinyl ether, hexanediol divinyl ether, cyclohexanedimethanol divinyl ether, and trimethylolpropane trivinyl ether, and monovinyl ether compounds such as ethyl vinyl ether, *n*-butyl vinyl ether, isobutyl vinyl ether, octadecyl vinyl ether, cyclohexyl vinyl ether, hydroxybutyl vinyl ether, 2-ethylhexyl vinyl ether, cyclohexanedimethanol monovinyl ether, *n*-propyl vinyl ether, isopropyl vinyl ether, isopropenyl vinyl ether, dodecyl vinyl ether, diethylene glycol monovinyl ether, ethylene glycol monovinyl ether, triethylene glycol monovinyl ether, hydroxyethyl monovinyl ether, and hydroxynonyl monovinyl ether.

Among these vinyl ether compounds, divinyl ether compounds and trivinyl ether compounds are preferable from the viewpoint of curability, adhesion, and surface hardness, and divinyl ether compounds are particularly preferable. With regard to the vinyl ether compound, one type thereof may be used on its own or two or more types may be used in an appropriate combination.

As other polymerizable compounds that can be used in the present invention, (meth)acrylic acid esters such as (meth)acrylic-based monomers or prepolymers, epoxy-based monomers or prepolymers, or urethane-based monomers or prepolymers (hereinafter, also called 'acrylate compounds' as appropriate) are preferably used. Preferred specific examples thereof are as follows.

That is, there can be cited 2-ethylhexyldiglycol acrylate, 2-hydroxy-3-phenoxypropyl acrylate, 2-hydroxybutyl acrylate, hydroxypivalic acid neopentyl glycol diacrylate, 2-acryloyloxyethylphthalic acid, methoxy polyethylene glycol acrylate, tetramethylolmethane triacrylate, 2-acryloyloxyethyl-2-hydroxyethylphthalic acid, dimethyloltricyclodecane diacrylate, ethoxylated phenyl acrylate, 2-acryloyloxyethylsuccinic acid, nonylphenol ethylene oxide (EO) adduct acrylate, modified glycerol triacrylate, bisphenol A diglycidyl ether acrylic acid adduct, modified bisphenol A diacrylate, phenoxypolyethylene glycol acrylate, 2-acryloyloxyethylhexahydrophthalic acid, bisphenol A propylene oxide (PO) adduct diacrylate, bisphenol A EO adduct diacrylate, dipentaerythritol hexaacrylate, pentaerythritol triacrylate tolylenediisocyanate urethane prepolymer, lactone-modified flexible acrylate, butoxyethyl acrylate, propylene glycol diglycidyl ether acrylic acid adduct, pentaerythritol triacrylate hexamethylenediisocyanate urethane prepolymer, 2-hydroxyethyl acrylate, methoxydipropylene glycol acrylate, ditrimethylolpropane tetraacrylate, pentaerythritol triacrylate hexamethylenediisocyanate urethane prepolymer, stearyl acrylate, isoamyl acrylate, isomyristyl acrylate, isostearyl acrylate, lactone-modified acrylate, and corresponding methacrylate compounds.

The monomers listed above have high reactivity, low viscosity, and excellent adhesion to a recording medium.

In the present invention, in order to improve the non-tackiness (suppression of surface tackiness) and surface smoothness, it is preferable to use the compound represented by Formula (I) in combination with, among the compounds having an ethylenically unsaturated bond described above, a polyfunctional acrylate compound.

When a polyfunctional ethylenically unsaturated compound is used, the content of the polyfunctional ethylenically unsaturated compound, relative to the total weight of the coating composition, is preferably 5 to 80 wt %, and more preferably 40 to 70 wt %. When the content is in the above-mentioned range, the non-tackiness is excellent.

In the present invention, depending on various intended applications, a radical/cationic hybrid coating composition may be employed in which a combination of the radically polymerizable compound and the radical photopolymerization initiator is used together with a combination of the cationically polymerizable compound described below and the cationic polymerization initiator.

The cationically polymerizable compound that can be used in the present invention is not particularly limited as long as it is a compound for which a polymerization reaction is initiated by an acid generated from a photo-acid generator and that cures, and various types of known cationically polymerizable monomers known as cationically photopolymerizable monomers may be used.

When the cationically polymerizable compound used does not have an ethylenically unsaturated bond, a compound having an ethylenically unsaturated bond and the cationically polymerizable compound having no ethylenically unsaturated bond are used in combination.

Examples of the cationically polymerizable monomer include epoxy compounds, vinyl ether compounds, and oxetane compounds described in JP-A-6-9714, JP-A-2001-31892, JP-A-2001-40068, JP-A-2001-55507, JP-A-2001-310938, JP-A-2001-310937, JP-A-2001-220526 .

Furthermore, as the cationically polymerizable compound, for example, a polymerizable compound applied in a photocuring resin of a cationic polymerization system is known, and in recent years polymerizable compounds applied in photocuring resins of cationic photopolymerization systems sensitized to a visible light wavelength range of 400 nm or higher have been disclosed in, for example, JP-A-6-43633 and JP-A-8-324137. They may be applied in the coating composition of the present invention.

From the viewpoint of curability and surface smoothness, the content of the compound (C) having an ethylenically unsaturated bond in the photocurable coating composition of the present invention, relative to the total weight of the coating composition, is preferably in the range of 10 to 97 wt %, more preferably in the range of 30 to 95 wt %, and particularly preferably in the range of 50 to 90 wt %.

Furthermore, with regard to the compound (C) having an ethylenically unsaturated bond, one type thereof may be used or two or more types may be used in combination.

### Co-sensitizer

The coating composition of the present invention may comprise a co-sensitizer.

In the present invention, the co-sensitizer has a function of further improving the sensitivity of a sensitizer toward actinic radiation, suppressing inhibition of polymerization of a polymerizable compound by oxygen.

Examples of such a co-sensitizer include amines such as compounds described in M. R. Sander et al., Journal of Polymer Society, Vol. 10, p. 3173 (1972), JP-B-44-20189, JP-A-51-82102, JP-A-52-134692, JP-A-59-138205, JP-A-60-84305, JP-A-62-18537, JP-A-64-33104, and Research Disclosure 33825.

Specific examples thereof include triethanolamine, ethyl *p*-dimethylaminobenzoate, *p*-formyldimethylaniline, and *p*-methylthiodimethylaniline.

Other examples of the co-sensitizer include thiols and sulfides such as thiol compounds described in JP-A-53-702, JP-PCT-55-500806 (JP-PCT denotes a published Japanese translation of a PCT application), and JP-A-5-142772, and disulfide compounds described in JP-A-56-75643.

Specific examples thereof include 2-mercaptobenzothiazole, 2-mercaptobenzoxazole, 2-mercaptobenzoimidazole, 2-mercapto-4(3H)-quinazoline, and β-mercaptonaphthalene.

Other examples thereof include amino acid compounds (e.g. *N*-phenylglycine), organometallic compounds described in JP-B-48-42965 (e.g. tributyltin acetate), hydrogen donors described in JP-B-55-34414, sulfur compounds described in JP-A-6-308727 (e.g. trithiane), phosphorus compounds described in JP-A-6-250387 (e.g. diethylphosphite), and Si-H and Ge-H compounds described in JP-A-8-54735.

### Surfactant

The coating composition of the present invention may comprise a surfactant.

As the surfactant, those described in JP-A-62-173463 and JP-A-62-183457 can be cited. Examples thereof include anionic surfactants such as dialkylsulfosuccinic acid salts, alkylnaphthalenesulfonic acid salts, and fatty acid salts, nonionic surfactants such as polyoxyethylene alkyl ethers, polyoxyethylene alkyl aryl ethers, acetylene glycols, and polyoxyethylene/polyoxypropylene block copolymers, and cationic surfactants such as alkylamine salts and quaternary ammonium salts. An organofluoro compound or a polysiloxane compound may be used as the surfactant. The organofluoro compound is preferably hydrophobic. Examples of the organofluoro compound include fluorine-based surfactants, oil-like fluorine-based compounds (e.g. fluorine oil), solid fluorine compound resins (e.g. tetrafluoroethylene resin), and those described in JP-B-57-9053 (paragraphs 8 to 17) and JP-A-62-135826. Among them, polydimethylsiloxane is preferable as the surfactant.

The surfactant may be used on its own or in a combination of two or more types.

### Other components

Other components may be added to the coating composition of the present invention as necessary. Examples of said other components include a polymerization inhibitor, a solvent, inorganic particles, and organic particles.

The polymerization inhibitor may be added from the viewpoint of enhancing the storage stability. The polymerization inhibitor is preferably added at 200 to 20,000 ppm relative to the total amount of the coating composition of the present invention.

Examples of the polymerization inhibitor include hydroquinone, benzoquinone, *p*-methoxyphenol, TEMPO, TEMPOL, and Al cupferron.

It is possible to form an overprint layer or an overprint with intentionally degraded surface gloss by adding inorganic particles such as AEROSIL or organic particles such as crosslinked polymethyl methacrylate (PMMA) to the coating composition of the present invention.

Taking into consideration the coating composition of the present invention being a radiation curing type coating composition, it is preferable for it not to contain any solvent so that the coating composition of the present invention can react quickly and be cured after coating. However, as long as the curing speed, of the coating composition is not affected, a specified solvent may be added.

In the present invention, an organic solvent may be used as the solvent, and from the viewpoint of curing speed, it is preferable for substantially no water to be added. The organic solvent may be added in order to improve adhesion to a printing substrate (an image receiving substrate such as paper).

When an organic solvent is used, the smaller the amount thereof, the more preferable it is, and it is preferably 0.1 to 5 wt % relative to the total weight of the coating composition of the present invention, and more preferably 0.1 to 3 wt %.

In addition to the above, a known compound may be added to the coating composition of the present invention as necessary.

Examples thereof include a surfactant, a leveling additive, a matting agent and, for adjusting film physical properties, a polyester-based resin, polyurethane-based resin, vinyl-based resin, acrylic-based resin, rubber-based resin, or wax, which may be appropriately selected and added.

Furthermore, in order to improve the adhesion to a printing substrate such as a polyolefin or polyethylene terephthalate (PET), a tackifier that does not inhibit polymerization is preferably added. Specific examples of the tackifier include high molecular weight tacky polymers described on pp. 5 and 6 of JP-A-2001-49200 (e.g. a copolymer formed from an ester of (meth)acrylic acid and an alcohol having an alkyl group having 1 to 20 carbons, an ester of (meth)acrylic acid and an alicyclic alcohol having 3 to 14 carbons, or an ester of (meth)acrylic acid and an aromatic alcohol having 6 to 14 carbons), and a low molecular weight tackifying resin having a polymerizable unsaturated bond.

### Properties of photocurable coating composition

Preferred physical properties of the photocurable coating composition of the present invention are now explained.

When used as a photocurable coating composition, while taking into consideration coating properties, the viscosity at 25°C to 30°C is preferably 5 to 100 mPa·s, and more preferably 7 to 75 mPa·s.

The compositional ratio of the photocurable coating composition of the present invention is preferably adjusted as appropriate so that the viscosity is in the above range.

Setting the viscosity at 25°C to 30°C at the above value enables an overprint having an overprint layer with excellent non-tackiness (no surface tackiness) and excellent surface smoothness to be obtained.

The surface tension of the photocurable coating composition of the present invention is preferably 16 to 40 mN/m, and more preferably 18 to 35 mN/m.

### Overprint and process for producing same

The overprint of the present invention has, on a printed material, an overprint layer in which the coating composition of the present invention is photocured.

The overprint referred to here is at least one overprint layer formed on the surface of a printed material obtained by a printing method such as electrophotographic printing, inkjet printing, screen printing, flexographic printing, lithographic printing, intaglio printing, or relief printing.

The overprint layer in the overprint of the present invention may be formed on part of a printed material or may be formed on the entire surface of a printed material, and in the case of a double-side printed material, it is preferable to form the overprint layer on the entire surface of a printing substrate on both sides. Furthermore, needless to say, the overprint layer may be formed on an unprinted area of a printed material.

A printed material used for the overprint of the present invention is preferably an electrophotographically printed material. Forming an overprint layer, which is a cured layer of the coating composition of the present invention, on an electrophotographically printed material enables an overprint that has excellent non-tackiness, surface smoothness, and gloss and is visually similar to a silver halide photographic print to be obtained.

The thickness of the overprint layer in the overprint of the present invention is preferably 1 to 10 µm, and more preferably 3 to 6 µm.

A method for measuring the thickness of the overprint layer is not particularly limited, but a preferred example thereof include a measurement method in which a cross section of an overprint is examined using an optical microscope.

The process for producing an overprint of the present invention preferably comprises a step of obtaining a printed material by carrying out printing on a recording medium (printing substrate), a step of coating the printed material with the photocurable coating composition of the present invention, and a step of photocuring the coating composition.

Furthermore, the process for producing an overprint of the present invention preferably comprises a step of generating an electrostatic latent image on a latent image support, a step of developing the electrostatic latent image using a toner, a step of obtaining an electrophotographically printed material by transferring the developed electrostatic image onto a printing substrate, a step of coating the electrophotographically printed material with the photocurable coating composition of the present invention, and a step of photocuring the coating composition.

The printing substrate is not particularly limited, and a known substrate may be used, but an image receiving paper is preferable, plain paper or coated paper is more preferable, and coated paper is yet more preferable. As the coated paper, a double-sided coated paper is preferable since a full color image can be attractively printed on both sides. When the printing substrate is paper or a double-sided coated paper, the paper weight is preferably 20 to 200 g/m², and more preferably 40 to 160 g/m²_{.}

A method for developing an image in the electrophotographic process is not particularly limited, and any method may be selected from methods known to a person skilled in the art. Examples thereof include a cascade method, a touch down method, a powder cloud method, and a magnetic brush method.

Furthermore, examples of a method for transferring a developed image to a recording medium include a method employing a corotron or a bias roll.

A fixing step of fixing an image in the electrophotographic process may be carried out by various appropriate methods. Examples thereof include flash fixing, thermal fixing, pressure fixing, and vapor fusing.

The image formation method, equipment, and system in the electrophotographic process are not particularly limited, and known ones may be used. Specific examples are described in the US Patents below.

US Pat. Nos. 4,585,884, 4,584,253, 4,563,408, 4,265,990, 6,180,308, 6,212,347, 6,187,499, 5,966,570, 5,627,002, 5,366,840, 5,346,795, 5,223,368, and 5,826,147.

In order to apply the photocurable coating composition, a commonly used liquid film coating device may be used. Specific examples thereof include a roller coater, a rod coater, a blade, a wire-wound bar, a dip coater, an air knife, a curtain coater, a slide coater, a doctor knife, a screen coater, a gravure coater such as an offset gravure coater, a slot coater, and an extrusion coater. These devices may be used in the same manner as normal, and examples thereof include direct and reverse roll coating, blanket coating, dampener coating, curtain coating, lithographic coating, screen coating, and gravure coating. In a preferred embodiment, application and curing of the coating composition of the present invention are carried out using 2 or 3 roll coaters and UV curing stations.

Moreover, when coating or curing the coating composition of the present invention, heating may be carried out as necessary.

The coat weight of the coating composition of the present invention is preferably in the range of 1 to 10 g/m² as a weight per unit area, and more preferably 3 to 6 g/m2_{.}

Furthermore, the amount per unit area of an overprint layer formed in the overprint of the present invention is preferably in the range of 1 to 10 g/m², and more preferably 3 to 6 g/m².

As an energy source used for initiating polymerization of the polymerizable compound contained in the coating composition of the present invention, for example, one having actinism (actinic radiation) such as radiation having a wavelength in the UV or visible spectrum can be cited. Polymerization by irradiation with actinic radiation is excellent for initiating polymerization and regulating the speed of polymerization.

As a preferred actinic radiation source, for example, there are a mercury lamp, a xenon lamp, a carbon arc lamp, a tungsten filament lamp, a laser, and sunlight.

It is preferable to carry out irradiation using a high speed conveyor (preferably 15 to 70 m/min) under irradiation with UV rays (UV light irradiation) using a medium pressure mercury lamp, and in this case UV light irradiation is preferably carried out at a wavelength of 200 to 500 nm for less than 1 sec. Preferably, the speed of the high speed conveyor is 15 to 35 m/min, and UV light having a wavelength of 200 to 450 nm is applied for 10 to 50 milliseconds (ms). The emission spectrum of a UV light source normally overlaps the absorption spectrum of a UV polymerization initiator. Depending on the situation, curing equipment used may include, without being limited to, a reflection plate for focusing or diffusing UV light or a cooling system for removing heat generated by a UV light source.

### EXAMPLES

The present invention is explained in further detail by reference to Examples below, but the present invention is not limited to these Examples.

### Example 1

The components below were stirred using a stirrer, thus giving a photocurable coating composition.

| | |
|---|---|
| Ebecryl 605 (bisphenol A epoxy diacrylate, Cytec Surface Specialties) | 40 wt % |
| Tripropylene glycol diacrylate (Aldrich) | 20 wt % |
| Dodecyl acrylate | 20 wt % |
| IRGACURE 907 (Ciba Specialty Chemicals) | 5 wt % |
| DAROCUR TPO (Ciba Specialty Chemicals) | 5 wt % |
| Compound represented by Formula (I) (Compound (I-1)) | 8 wt % |
| Polydimethylsiloxane (Aldrich) | 2 wt % |

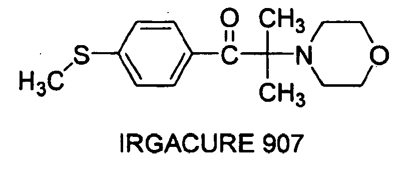

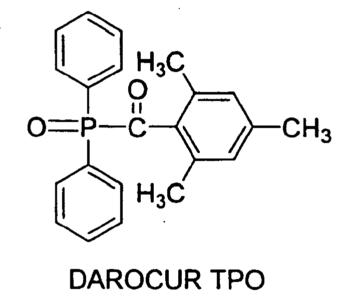

### Evaluation of non-tackiness (suppression of surface tackiness)

An electrophotographically printed material obtained using double-sided coated paper output from a DC8000 digital printer manufactured by Fuji Xerox Co., Ltd. was coated on one side with a coating composition at a film thickness of 5 g/m² using a bar coater, and a film coating thus obtained was exposed at 120 mJ/cm² with an illumination intensity of 1.0 W/cm² using a UV lamp (LC8) manufactured by Hamamatsu Photonics K.K., thus giving an overprint sample. The non-tackiness after exposure was evaluated by touch. Evaluation criteria are shown below.
Excellent: no tackiness
Good: almost no tackiness
Poor: some tackiness

### Transparency (color hue)

An overprint sample was prepared by coating a polyethylene terephthalate (PET) film at a thickness of 5 g/m² using a wire-wound bar coater, and exposing the film coating thus obtained at 500 mJ/cm² with an illumination intensity of 1.0 W/cm² using a UV lamp (LC8) manufactured by Hamamatsu Photonics K.K. The PET film thus obtained was visually evaluated, sensory evaluation was carried out for color hue (transparency), chromaticity indices a and b were measured using a CR-100 colorimeter manufactured by Konica Minolta Holdings, Inc., and a combined evaluation was made using the criteria below. The results are given in Table 1.
Good: good transparency (in the ranges -2.0 ≤ a ≤ 0 and -6 ≤ b ≤ -2).
Fair: a yellow color could be discerned only by placing the PET on white paper (in the ranges -4.0 ≤ a < -2.0 and -4 < b ≤ 0).
Poor: strongly yellowish transparency (values of a and b were outside the above-mentioned ranges).

As a result of evaluation by the methods above, the photocurable coating composition of Example 1 gave 'good' for non-tackiness and 'good' for transparency.

### Comparative Example 1

A photocurable coating composition was prepared by the same method as in Example 1 except that the compound represented by Formula (I) was replaced with 4 wt % each of IRGACURE 907 and DAROCUR TPO (9 wt % each in total). Evaluation of performance was also carried out in the same manner as in Example 1.

### Examples 2 to 20 and Comparative Examples 2 and 3

Photocurable coating compositions were prepared by the same method as in Example 1 except that the compound represented by Formula (I) was changed to a compound described in Table 1. Evaluation of performance was also carried out in the same manner as in Example 1.

### Comparative Example 4

A photocurable coating composition was prepared by the same method as in Example 1 except that an additional 8 wt % of dodecyl acrylate was used instead of the compound represented by Formula (I). Evaluation of performance was also carried out in the same manner as in Example 1.

**(Table 1)**

| | Compound represented by Formula (I) | Non-tackiness | Transparency |
|---|---|---|---|
| Ex. 1 | I-1 | Excellent | Good |
| Ex. 2 | I-3 | Excellent | Good |
| Ex. 3 | I-4 | Excellent | Good |
| Ex. 4 | I-7 | Excellent | Good |
| Ex. 5 | I-8 | Excellent | Good |
| Ex. 6 | I-11 | Excellent | Good |
| Ex. 7 | I-19 | Excellent | Good |
| Ex. 8 | I-20 | Excellent | Good |
| Ex. 9 | I-23 | Excellent | Good |
| Ex. 10 | I-27 | Excellent | Good |
| Ex. 11 | I-31 | Excellent | Good |
| Ex. 12 | I-32 | Excellent | Good |
| Ex. 13 | I-35 | Excellent | Good |
| Ex. 14 | I-38 | Excellent | Good |
| Ex. 15 | I-54 | Excellent | Good |
| Ex. 16 | I-64 | Excellent | Good |
| Ex. 17 | I-65 | Excellent | Good |
| Ex. 18 | I-80 | Excellent | Good |
| Ex.19 | I-116 | Excellent | Good |
| Ex. 20 | I-123 | Excellent | Good |
| Comp. Ex. 1 | None added | Good | Good |
| Comp. Ex. 2 | 2-Chlorothioxanthone | Excellent | Poor |
| Comp. Ex. 3 | 2,4-Diethylthioxanthone | Excellent | Poor |
| Comp. Ex. 4 | Dodecyl acrylate | Poor | Good |

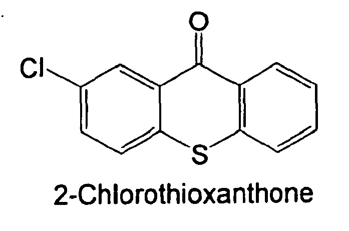

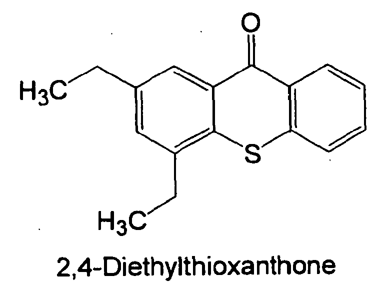

### Example 21

20 sheets of printed material were prepared by electrophotographically printing full color images, each having a few frames, on both sides of A4 double-sided coated paper (paper weight 100 g/m²), both sides of the printed materials were coated with the photocurable coating compositions prepared in Examples 1 to 4 above by the same method as in Example 1 at a coat weight of 5 g/m², and then irradiated with UV rays, thus giving overprints. When they were bound to give a photo album, a photo album giving the same visibility as that given by a silver halide photographic print was obtained.

### Example 22

10 sheets of printed material were prepared by electrophotographically printing a full color image including a menu photograph and text on both sides of substantially B4 double-sided coated paper (paper weight 100 g/m²), both sides of the printed materials were coated with the photocurable coating compositions prepared in Examples 1 to 4 above by the same method as in Example 1 at a coat weight of 5 g/m² per side, and then irradiated with UV rays, thus giving overprints on both sides. When they were bound to give a restaurant menu, a restaurant menu giving the same visibility as that given by a silver halide photographic print was obtained.

In Examples 1 to 22 above, the amount of overprint layer formed by coating one side of a printing substrate with a photocurable coating composition at a coat weight of 5 g/m² and curing it was 5 g/m² in each case.

Furthermore, the thickness of the overprint layer thus formed was about 5 µm in each case. The thickness of the overprint layer thus formed was measured by examining a cross section of the overprint using an optical microscope.

## Claims

1. A photocurable coating composition comprising:
(A) a compound represented by Formula (I) below;
(B) a photopolymerization initiator; and
(C) a compound having an ethylenically unsaturated bond, 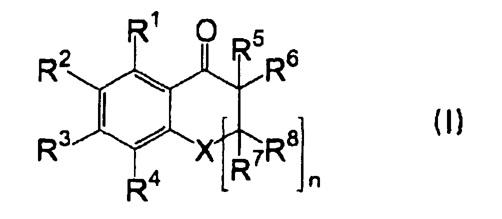 wherein X denotes O, S, or NR, n denotes an integer of 0 to 4, R denotes a hydrogen atom, an alkyl group, or an acyl group, R¹ to R⁸ independently denote a hydrogen atom or a monovalent substituent, and R¹ to R⁴ may form a ring in which two thereof that are adjacent are bonded to each other.

2. The photocurable coating composition according to Claim 1, wherein the photopolymerization initiator (B) comprises an α-aminoketone-based compound and/or an acylphosphine oxide-based compound.

3. The photocurable coating composition according to Claim 1 or 2, wherein the photopolymerization initiator (B) comprises an α-aminoketone-based compound and an acylphosphine oxide-based compound.

4. Use of the photocurable coating composition according to any one of Claims 1 to 3 in order to produce an overprint.

5. Use of the photocurable coating composition according to Claim 4 in order to produce an overprint for an electrophotographically printed material.

6. An overprint having on an electrophotographically printed material an overprint layer in which the photocurable coating composition according to any one of Claims 1 to 3 is photocured.

7. The overprint according to Claim 6, wherein the overprint layer has a thickness of 1 to 10 µm.

8. A process for producing an overprint, the process comprising:
a step of obtaining an electrophotographically printed material by carrying out electrophotographic printing on a printing substrate;
a step of coating the electrophotographically printed material with the photocurable coating composition according to any one of Claims 1 to 3; and
a step of photocuring the photocurable coating composition.

9. The process for producing an overprint according to Claim 8, wherein the photocurable coating composition cured on the electrophotographically printed material has a thickness of 1 to 10 µm.

## Patentansprüche

1. Lichthärtbare Beschichtungszusammensetzung, umfassend:
(A) eine durch die folgende Formel (I) dargestellte Verbindung;
(B) einen Photopolymerisationsinitiator; und
(C) eine Verbindung mit einer ethylenisch ungesättigten Bindung, 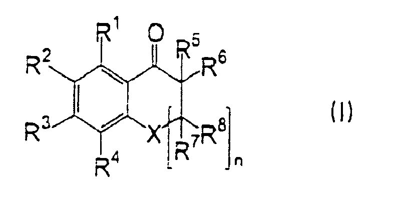 worin X O, S oder NR darstellt, n eine ganze Zahl von 0 bis 4 darstellt, R ein Wasserstoffatom, eine Alkylgruppe oder eine Acylgruppe darstellt, R¹ bis R⁸ unabhängig voneinander ein Wasserstoffatom oder ein einwertiger Substituent darstellen und R¹ bis R⁴ einen Ring bilden können, indem zwei davon, die benachbart sind, aneinander gebunden sind.

2. Lichthärtbare Beschichtungszusammensetzung gemäß Anspruch 1, worin der Photopolymerisationsinitiator (B) eine α-Aminoketon-basierte Verbindung und/oder eine Acylphosphinoxid-basierte Verbindung umfasst.

3. Lichthärtbare Beschichtungszusammensetzung gemäß Anspruch 1 oder 2, worin der Photopolymerisationsinitator (B) eine α-Aminoketon-basierte Verbindung und eine Acylphosphinoxid-basierte Verbindung umfasst.

4. Verwendung der lichthärtbaren
Beschichtungszusammensetzung gemäß mindestens einem der Ansprüche 1 bis 3 zur Herstellung eines Aufdrucks.

5. Verwendung der lichthärtbaren
Beschichtungszusammensetzung gemäß Anspruch 4 zur Herstellung eines Aufdrucks für ein elektrophotographisch bedrucktes Material.

6. Aufdruck, der auf einem elektrophotographisch bedruckten Material eine Aufdruckschicht aufweist, in der die lichthärtbare Beschichtungszusammensetzung gemäß mindestens einem der Ansprüche 1 bis 3 lichtgehärtet ist.

7. Aufdruck gemäß Anspruch 6, worin die Aufdruckschicht eine Dicke von 1 bis 10 µm aufweist.

8. Verfahren zur Herstellung eines Aufdrucks, wobei das Verfahren folgendes umfasst:
einen Schritt zum Erhalten eines elektrophotographisch bedruckten Materials, in dem ein elektrophotographischer Druck auf einem Drucksubstrat durchgeführt wird;
einen Schritt zum Beschichten des elektrophotographisch bedruckten Materials mit der lichthärtbaren Beschichtungszusammensetzung gemäß irgend einem der Ansprüche 1 bis 3 und
einen Schritt zum Lichthärten der lichthärtbaren Beschichtungszusammensetzung.

9. Verfahren zur Herstellung eines Aufdrucks gemäß Anspruch 8, worin die lichthärtbare Beschichtungszusammensetzung, die auf dem elektrophotographisch bedruckten Material gehärtet wurde, eine Dicke von 1 bis 10 µm aufweist.

## Revendications

1. Composition de revêtement photodurcissable comprenant :
(A) un composé représenté par la formule (I) ci-dessous ;
(B) un initiateur de photopolymérisation ; et
(C) un composé présentant une liaison éthyléniquement insaturée, 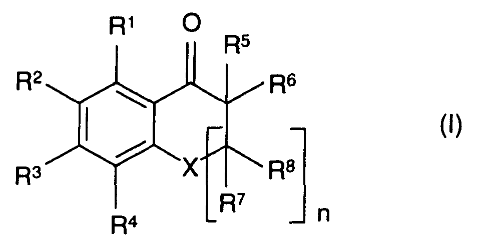 dans laquelle X représente O, S ou NR, n représente un nombre entier 0 à 4, R représente un atome d'hydrogène, un groupe alkyle ou un groupe acyle, R¹ à R⁸ représentent indépendamment un atome d'hydrogène ou un substituant monovalent, et R¹ à R⁴ peuvent former un noyau dans lequel deux de ceux-ci qui sont adjacents sont liés l'un à l'autre.

2. Composition de revêtement photodurcissable selon la revendication 1, dans laquelle l'initiateur de photopolymérisation (B) comprend un composé à base d'α-aminocétone et/ou un composé à base d'oxyde d'acylphosphine.

3. Composition de revêtement photodurcissable selon la revendication 1 ou 2, dans laquelle l'initiateur de photopolymérisation (B) comprend un composé à base d'α-aminocétone et un composé à base d'oxyde d'acylphosphine.

4. Utilisation de la composition de revêtement photodurcissable selon l'une quelconque des revendications 1 à 3 pour produire une surimpression.

5. Utilisation de la composition de revêtement photodurcissable selon la revendication 4 pour produire une surimpression pour un matériau imprimé par voie électrophotographique.

6. Surimpression présentant sur un matériau imprimé par voie électrophotographique une couche de surimpression dans laquelle la composition de revêtement photodurcissable selon l'une quelconque des revendications 1 à 3 est photodurcie.

7. Surimpression selon la revendication 6, dans laquelle la couche de surimpression présente une épaisseur de 1 à 10 µm.

8. Procédé de production d'une surimpression, le procédé comprenant :
une étape consistant à obtenir un matériau imprimé par voie électrophotographique en réalisant une impression électrophotographique sur un substrat d'impression,
une étape consistant à revêtir le matériau imprimé par voie électrophotographique avec la composition de revêtement photodurcissable selon l'une quelconque des revendications 1 à 3 ; et
une étape consistant à photodurcir la composition de revêtement photodurcissable.

9. Procédé de production d'une surimpression selon la revendication 8, dans lequel la composition de revêtement photodurcissable durcie sur le matériau imprimé par voie électrophotographique présente une épaisseur de 1 à 10 µm.
